(19) Europäisches Patentamt / European Patent Office / Office européen des brevets

(11) **EP 4 131 096 A1**

(12) **EUROPEAN PATENT APPLICATION**

(43) Date of publication:
**08.02.2023 Bulletin 2023/06**

(21) Application number: **22174826.2**

(22) Date of filing: **23.05.2022**

(51) International Patent Classification (IPC):
**G06Q 10/04** (2012.01)   **G06Q 50/30** (2012.01)

(52) Cooperative Patent Classification (CPC):
**G06Q 10/047; G06Q 50/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021 JP 2021128543**

(71) Applicant: **FUJITSU LIMITED**
**Kawasaki-shi, Kanagawa 211-8588 (JP)**

(72) Inventors:
• **Hida, Masaharu**
 **Kawasaki-shi, Kanagawa 211-8588 (JP)**
• **Shimokawa, Satoshi**
 **Kawasaki-shi, Kanagawa 211-8588 (JP)**
• **Matsuoka, Hidetoshi**
 **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **ROUTE SEARCH PROGRAM, ROUTE SEARCH METHOD, AND INFORMATION PROCESSING APPARATUS**

(57)   A route search program that causes at least one computer to execute a process, the process includes acquiring a storage period of an item for each point of a plurality of points in a case where the item is moved from a departure point to a destination point, the plurality of points including the departure point, the destination point, and one or more relay points; and searching for a route along which the item is moved from the departure point to the destination point based on a traveling cost, storage information, and the acquired storage period, a traveling cost indicating a cost for moving the item between each two points of the plurality of points, the storage information indicating a storage coefficient being used for calculation of a storage cost of the item at each point of the plurality of points in accordance with the storage period.

FIG. 1

EP 4 131 096 A1

**Description**

FIELD

The embodiment discussed herein is related to a route search program, a route search method, and an information processing apparatus.

BACKGROUND

In the related art, a delivery service agent delivers an item of a shipper through a plurality of relay points, so that the item reaches a customer at a destination point after a predetermined number of days taken for delivery elapses. In accordance with a delivery plan, the item is delivered along a delivery route linking optimum relay points. For example, in a delivery plan in a case where a delivery date of an item is designated, the item is temporarily stored in a warehouse at a relay point near a destination. The item is then taken out from the warehouse on a date and time corresponding to the delivery date, and is delivered to a customer.

As related art, for example, there is a technique for determining a transport route by performing an optimization calculation by using, as an objective function, an expression including a transport cost of a produced product, a production cost of the product, and a storage cost in a warehouse in which a stock of the product is kept at all times. For example, there is a technique for creating a transport rationalization plan that minimizes a transport cost, by comparing a transport route based on a transport fee, a storage fee in a warehouse, a discount rate, and the like with actual data. There is also a technique for selecting a storage location suitable for a storage condition of an article from among a plurality of storage locations.

Japanese Laid-open Patent Publication No. 2009-286502, Japanese National Publication of International Patent Application No. 2002-352372, and Japanese Laid-open Patent Publication No. 2018-77774 are disclosed as related art.

SUMMARY

[TECHNICAL PROBLEMS]

However, in the related art, it is difficult to search for a relay point where an item is to be stored and a route along which the item is to be moved to a destination point, by taking into account a fact that a delivery period taken for delivery on a date and time desired by a customer is longer than a delivery period taken for the earliest delivery, for example.

In one aspect, an object of the present disclosure is to enable an appropriate point for temporal storage of an item and an appropriate route to be searched for.

[SOLUTION TO PROBLEM]

According to an aspect of the embodiments, a route search program that causes at least one computer to execute a process, the process includes acquiring a storage period of an item for each point of a plurality of points in a case where the item is moved from a departure point to a destination point, the plurality of points including the departure point, the destination point, and one or more relay points; and searching for a route along which the item is moved from the departure point to the destination point based on a traveling cost, storage information, and the acquired storage period, a traveling cost indicating a cost for moving the item between each two points of the plurality of points, the storage information indicating a storage coefficient being used for calculation of a storage cost of the item at each point of the plurality of points in accordance with the storage period.

[ADVANTAGEOUS EFFECTS OF INVENTION]

According to one aspect, an appropriate point for temporal storage of an item and an appropriate route may be searched for.

BRIEF DESCRIPTION OF DRAWINGS

FIG. 1 is an explanatory diagram illustrating an example of a route search method according to an embodiment;
FIG. 2 is an explanatory diagram illustrating an example of an information processing system;

FIG. 3 is a block diagram illustrating an example of a hardware configuration of an information processing apparatus;

FIG. 4 is a block diagram illustrating an example of a functional configuration of the information processing apparatus;

FIG. 5 is an explanatory diagram illustrating an example of stored content of an item information table;

FIG. 6 is an explanatory diagram illustrating an example of stored content of a traveling cost table;

FIG. 7 is an explanatory diagram illustrating an example of stored content of a storage cost table;

FIG. 8 is an explanatory diagram illustrating an example of stored content of a stop cost table;

FIG. 9A is an explanatory diagram illustrating an example of stored content of an approximate cost table;

FIG. 9B is an explanatory diagram illustrating an example of stored content of an approximate cost table;

FIG. 10 is a flowchart illustrating an example of a procedure of an approximate cost calculation process;

FIG. 11 is a flowchart illustrating an example of a procedure of a route search process;

FIG. 12 is an explanatory diagram illustrating an example of various costs;

FIG. 13 is an explanatory diagram illustrating an approximate cost table in a case where a storage period is one day; and

FIG. 14 is an explanatory diagram illustrating an approximate cost table in a case where the storage period is 100 days.

DESCRIPTION OF EMBODIMENTS

An embodiment of a route search program, a route search method, and an information processing apparatus according to the present disclosure will be described in detail below with reference to the drawings.

(Example of Route Search Method according to Embodiment)

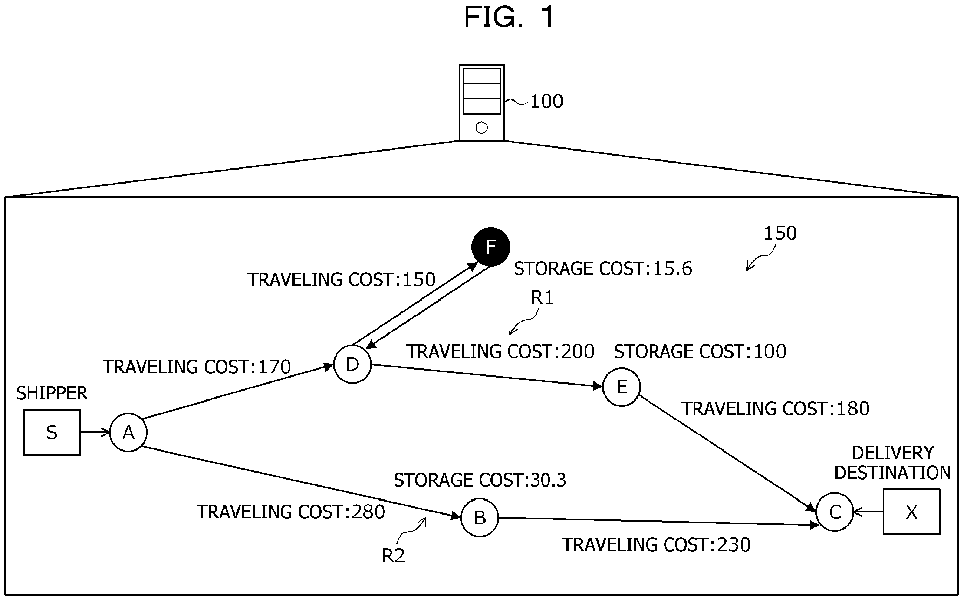

FIG. 1 is an explanatory diagram illustrating an example of a route search method according to an embodiment. An information processing apparatus 100 is a computer for searching for a route that includes an appropriate relay point and for which a cost and a delivery delay are suppressed in a case where an item is to be temporarily stored at the relay point when the item is moved from a departure point to a destination point. The information processing apparatus 100 is, for example, a server, a personal computer (PC), or the like.

For example, the item is delivered from the departure point to the destination point in accordance with a predetermined delivery route. As a delivery plan of the item, the information processing apparatus 100 searches for a plurality of delivery routes each linking a plurality of relay points.

In the related art, for example, in a case where time designation is made for an item and the item is to be temporarily stored in a warehouse or the like at a relay point, it is difficult to determine, from among many delivery routes, a warehouse of a delivery route that is appropriate for temporal storage of the item. For example, the storage cost for a warehouse in a large metropolitan area is likely to increase as the storage period increases. On the other hand, in a case where the item is temporarily stored in a warehouse located outside the large metropolitan area where the storage cost is low, a delivery delay is likely to occur for the item whose destination point is in the large metropolitan area. The delivery delay in this case is likely to occur because of an increase in traveling cost that is caused by road congestion or the like at the time of delivery to the large metropolitan area, for example.

Accordingly, in the present embodiment, description will be given of a route search method that may, by using various costs including a storage cost, select an appropriate relay point such as a warehouse where an item is to be temporarily stored and search for an optimum route in a case where the item is to be temporarily stored.

(1-1) Based on information included in item information acquired for each item delivery, the information processing apparatus 100 determines whether or not the item is to be temporarily stored in the middle of the delivery in a case where the item is delivered from a departure point to a destination point. The information processing apparatus 100 acquires information on an actual delivery period included in the item information and information on a normal delivery period. The information processing apparatus 100 determines a storage period that is a difference between the acquired actual delivery period and the acquired normal delivery period. If the actual delivery period is longer than the normal delivery period and thus the storage period is longer than 0, the information processing apparatus 100 determines that the item is to be temporarily stored in a warehouse at a relay point.

For example, the actual delivery period is a delivery period in a case where the item is delivered to a customer on the designated date and time based on the setting of time designation for the item. The actual delivery period differs for each item. For example, the normal delivery period is the shortest delivery period among delivery periods of respective delivery routes from the departure point to the destination point. For example, in a case where the actual delivery period is set by the time designation to four days and the normal delivery period is two days, the actual delivery period is longer than the normal delivery period. Thus, the information processing apparatus 100 determines that the item is to be temporarily stored at any of the relay points for a storage period of two days (48 hours) that is the difference.

(1-2) The information processing apparatus 100 acquires information on a delivery network 150. FIG. 1 illustrates the delivery network 150 of a delivery company. In the example of the delivery network 150 illustrated in FIG. 1, the delivery company has a plurality of relay points A to F. As the information on the delivery network 150, the information processing apparatus 100 acquires information on combinations of the relay points A to F that may be coupled to each other in the delivery network 150. For example, it is assumed that the departure point of the item is a collection point S of a shipper, the collection point S is near the relay point A, the destination point is a delivery destination (delivery point) X of a customer, and the delivery point X is near the relay point C. A mobility device such as a truck for use in delivery of the item stops at the relay points A to F, where the item is unloaded and loaded.

For simplification of description, it is assumed in FIG. 1 that, among the relay points A to F, the relay points B, E, and F each have a warehouse and thus the item is temporarily storable at the relay points B, E, and F.

In the description below, an example in which the information processing apparatus 100 sets the departure point and the destination point to the relay points in the delivery network 150 managed by the delivery company and searches for a route will be described in the embodiment. In the example illustrated in FIG. 1, the information processing apparatus 100 sets, as the departure point, the relay point A near the collection point S, and sets, as an arrival point, the relay point C near the delivery destination X. The information processing apparatus 100 performs a route search by selecting the relay point B, E, or F optimum for temporary storage of the item in the delivery network 150. The route search is not limited to this. The information processing apparatus 100 may search for a route including the collection point S and the delivery destination X. In a case of searching for a route including the delivery destination X, the information processing apparatus 100 sets the storage cost of the delivery destination X to a value greater than the storage cost of the relay points B, E, F, and the like by a certain value or more. In this manner, the information processing apparatus 100 may perform the route search by excluding routes in which the item is to be temporarily stored at the delivery destination X.

(1-3) In a case where the storage period is longer than 0 and thus the item is to be temporarily stored, the information processing apparatus 100 acquires various costs including a cost for temporary storage. In a case where the item is to be temporarily stored in the delivery network 150 managed by the delivery company, the information processing apparatus 100 acquires various costs as information for use in selecting an optimum relay point from among the relay points B, E, and F. The costs include, for example, a traveling cost, a storage cost, a stop cost, and the like. These various costs are stored and held in advance in a storage unit of the information processing apparatus 100. At the time of the route search, the information processing apparatus 100 refers to the various costs stored in the storage unit. For example, the storage unit stores a storage cost per one day (24 hours) as a storage coefficient for each relay point.

The traveling cost is a cost for moving an item. The traveling cost has, for example, a value based on a movement distance or the like over which the item is moved between a pair of adjacent relay points. The traveling cost has a characteristic that the value thereof increases as a distance between different points where the item is movable increases.

The storage cost is a cost for temporary storage of an item in a warehouse provided at a relay point or the like. The storage cost has, for example, a value corresponding to a storage period of the item at the relay point, manpower for the storage, a size of the warehouse, a vacancy of the warehouse, a rent of the warehouse, or the like. The storage cost has a characteristic that the value thereof increases as the storage period of the item increases. The information processing apparatus 100 calculates the storage cost by multiplying the storage coefficient for each relay point read from the storage unit by a desired storage period.

The stop cost is a value added each time an item stops at a relay point. The stop cost is set, for example, for each relay point. The stop cost has a characteristic that the value thereof increases as it takes more time and effort to enter and take out the item into and from the warehouse.

(1-4) In a case where the storage period is longer than 0 and thus the item is to be temporarily stored at a relay point, the information processing apparatus 100 performs a process of searching for a delivery route linking relay points with reference to the various costs stored in the storage unit. For one or more relay points located between the departure point and the destination point, the information processing apparatus 100 searches for a route along which the item is moved from the departure point to the destination point, based on the traveling cost of the item in each section between the relay points and the storage cost of the item at each relay point.

For example, the information processing apparatus 100 accepts designation of the departure point, the destination point, and the one or more relay points from among the plurality of relay points in the delivery network 150. In this case, for example, if the departure point and the destination point alone are directly designated through acquisition of the item information or the like, the information processing apparatus 100 may automatically set the rest as the relay points.

A simplified route search will be described by using the example illustrated in FIG. 1. When the relay point A is set as the departure point and the relay point C is set as the destination point, the information processing apparatus 100 obtains a plurality of routes corresponding to combinations of the plurality of relay points B, D, E, and F that are located between these relay points A and C and that may be coupled to each other.

The information processing apparatus 100 calculates a total cost for each of the delivery routes. The total cost is a total value of the value of the traveling cost, the value of the stop cost, and the value of the storage cost. The information processing apparatus 100 determines a route linking relay points and having the lowest total cost.

The storage cost differs for each relay point. In the example illustrated in FIG. 1, a value "100" of the storage cost of the relay point E is high, and a value "30.3" of the storage cost of the relay point B is low. For example, the storage cost differs in accordance with the location or the like of the relay point. The storage cost increases in accordance with the storage period for temporarily storing the item.

Thus, by taking into account the relay point where the item is temporarily stored and the storage period of the item at the relay point, the information processing apparatus 100 determines the delivery route linking relay points and having the lowest overall cost. Note that making only the storage cost low is not sufficient. For example, in a case where a relay point that is located outside a large metropolitan area and has a low storage cost is selected, the storage cost is low but the traveling cost is high. Thus, the overall cost may be high. The information processing apparatus 100 performs a search process in which the overall cost including the various costs decreases.

First, by using FIG. 1, a processing example in a case where the item is temporarily stored for one day at either the relay point B or E where the item is temporarily storable will be described. It is assumed that the relay point F does not exist and the item is temporarily storable at only either the relay point B or E. It is assumed that the information processing apparatus 100 does not take into account the stop cost, for simplification. It is also assumed that there are only two routes that are R1 (relay points A-D-E-C) and R2 (relay points A-B-C). It is assumed that the storage cost illustrated in FIG. 1 is a value when the item is temporarily stored for one day.

The information processing apparatus 100 determines an optimum route, based on the traveling cost and the storage cost. Description will be given using a simplified cost calculation example. The total cost in a case where the item is temporarily stored for a storage period of one day at the relay point E of the route R1 is calculated such that the traveling cost (170 + 200 + 180) + the storage cost (100) = 650. On the other hand, the total cost in a case where the item is temporarily stored for a storage period of one day at the relay point B of the route R2 is calculated such that the traveling cost (280 + 230) + the storage cost (30.3) = 540.3.

In this case, the information processing apparatus 100 determines the route R2 having the low total cost, as the delivery route. The information processing apparatus 100 also determines the relay point B as the relay point where the item is temporarily stored.

Next, by using FIG. 1, a processing example in a case where the item is temporarily stored for a storage period of 100 days at any of the relay points B, E, and F where the item is temporarily storable will be described. It is assumed that the other relay point F that enables temporal storage is provided on the route R1 side and a storage cost of this relay point F per one day is 15.6. The relay point F is coupled only to the relay point D. Thus, the item is to be moved back and forth between the relay point F and the relay point D when the item is temporarily stored at the relay point F.

The information processing apparatus 100 determines an optimum delivery route, based on the traveling cost and the storage cost. Description will be given using a simplified cost calculation example. The total cost in a case where an item is temporarily stored for a storage period of 100 days at the relay point E of the route R1 is calculated such that the traveling cost (170 + 200 + 180) + the storage cost (10000) = 10550. The total cost in a case where the item is temporarily stored at the relay point F of the route R1 is calculated such that the traveling cost (170 + 200 + 150 + 150 + 180) + the storage cost (1560) = 2410. The total cost in a case where the item is temporarily stored at the relay point B of the route R2 is calculated such that the traveling cost (280 + 230) + the storage cost (3030) = 3540.

In this case, the information processing apparatus 100 determines, as the delivery route, the route R1 including the relay point F and having the low total cost, and determines that the item is to be temporarily stored at the relay point F. As described above, the information processing apparatus 100 determines the delivery route having the low total cost and the relay point for storage, by taking into account a change in storage cost according to the storage period for temporarily storing the item.

(1-5) The information processing apparatus 100 performs the above-described route search by using a predetermined route search algorithm. For example, in a case where an A* algorithm is used, the information processing apparatus 100 performs a route search using a cost function f(n) represented by Equation (1) below.

$$f(n) = g(n) + h(n) \cdots (1)$$

The information processing apparatus 100 searches for a route for which the value of the cost function represented by Equation (1) above is optimized. For example, the information processing apparatus 100 determines a route having the lowest total cost among a plurality of candidate routes retrieved at the time of the route search. The information processing apparatus 100 searches for a route by using a cost $g(n)$ that denotes an actual value obtained each time a point of interest is moved forward to one relay point in a section from the departure point to the destination point and an approximate cost $h(n)$ of a cost for each of a plurality of routes each linking the relay point where the point of interest is located to the destination point.

When there are a plurality of (N) relay points, the departure point is denoted as $n = 1$, and the destination point is denoted as $n = N$, the information processing apparatus 100 sequentially searches for a route from the departure point and preferentially searches for a point for which the cost function f(n) is small. g(n) above denotes an actual cost from the departure point to a certain relay point n. Since the route to the point n is a searched route, the actual cost has been calculated. h(n) above denotes an approximate cost from the point n to the destination point. Since there are a plurality of candidate routes from the one relay point n to the destination point, the information processing apparatus 100 searches for a route by using the approximate cost h(n) prepared in advance by approximating the cost.

After the route search is performed at the point n subjected to the route search, the information processing apparatus 100 performs a route search by using the cost function f(n) for the next point n toward the destination point in the same manner as described above. In the example illustrated in FIG. 1, for example, in a first route search, the information processing apparatus 100 performs a route search by setting the relay point A as the departure point and setting each of the relay points B and D as the destination point. In a case where the relay point D having the lower cost is selected as a result of this route search, the information processing apparatus 100 then performs a second route search in which the relay point E that is the next relay point, of the relay point D, on the arrival point side is set as the destination point. In response to the destination point reaching the arrival point (the relay point C), the information processing apparatus 100 ends the route search process.

Although details will be described later, for the approximate cost h(n), by referring to an approximate cost table in which the approximate cost h(n) is associated with each relay point, the information processing apparatus 100 performs the route search. Although details will be described later, the approximate cost table includes values of the various costs for use in calculation of the approximate cost.

As a result of the route search, the information processing apparatus 100 determines relay points for which the overall cost is lowest in a section between the departure point and the destination point, and determines a delivery route linking the determined relay points. At this time, a relay point where the item is temporarily stored is also determined, and the item is temporarily stored at this relay point. The information processing apparatus 100 creates a delivery plan indicating the determined delivery route including the relay point where the item is temporarily stored. The delivery plan is presented to a driver or the like who delivers the item. In accordance with the delivery plan, the driver moves the item to the next relay point and finally delivers the item to the delivery destination.

Thus, in a case where an item is to be temporarily stored, the information processing apparatus 100 may search for a delivery route having a low total cost including the storage cost. The information processing apparatus 100 may determine a delivery route having a low total cost by taking into account various costs.

In the related art, in a case where an item is to be temporarily stored, the storage cost including the storage period is not taken into account. Thus, the storage cost may increase, and consequently the total cost may increase. In the related art, it is difficult to determine, from among many delivery routes, which relay point is appropriate for temporary storage of the item. In a case where only the storage cost is focused on and the item is temporarily stored in a warehouse located outside a large metropolitan area where the storage cost is low, a delivery delay may occur for the item whose destination point is in the large metropolitan area because of an increase in traveling cost caused by road congestion or the like.

By contrast, for example, the information processing apparatus 100 may determine a delivery route having a low total cost by temporarily storing an item at a relay point having a low storage cost even if the route has a high traveling cost. For example, in a case where the storage period of temporary storage is long, the information processing apparatus 100 may reduce the total cost by temporarily storing the item at the relay point F located outside the large metropolitan area and having a low storage cost as described above. By searching for a route with other costs such as the storage cost and the traveling cost included, the information processing apparatus 100 may select a delivery route having a low total cost while taking into account an increase in traveling cost caused by road congestion or the like near the destination point. The information processing apparatus 100 may suppress a delivery delay of the item whose destination point is in the large metropolitan area, for example.

(Example of Information Processing System 200)

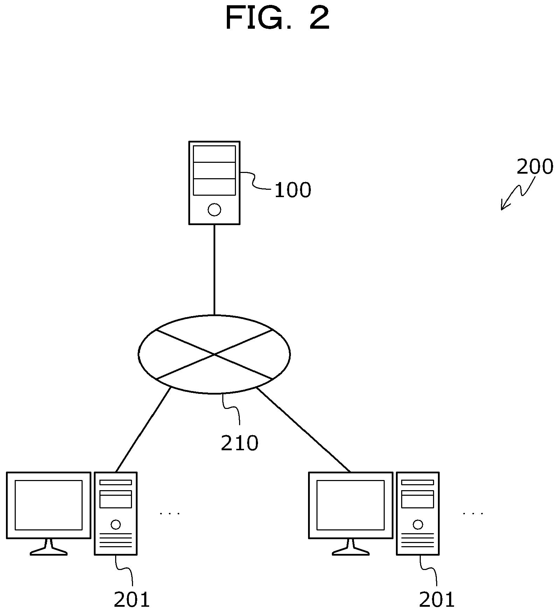

An example of an information processing system 200 to which the information processing apparatus 100 illustrated in FIG. 1 is applied will be described next by using FIG. 2.

FIG. 2 is an explanatory diagram illustrating an example of the information processing system 200. As illustrated in FIG. 2, the information processing system 200 includes the information processing apparatus 100 and client apparatuses 201.

In the information processing system 200, the information processing apparatus 100 and the client apparatuses 201 are coupled to each other via a network 210 that is wired or wireless. The network 210 is, for example, a local area network (LAN), a wide area network (WAN), an internet, or the like.

For example, the client apparatuses 201 are computer apparatuses that may be operated by a receptionist at a center where an item is accepted and by a driver of a truck for use in delivery of an item.

For example, the client apparatus 201 operated by the receptionist for an item accepts an input of item information related to delivery of the item, based on an operation input by the receptionist, and transmits the accepted item information to the information processing apparatus 100. The item information includes information on a shipper of the item, content information of the item, information on a collection point for the shipper and on a delivery destination (delivery point) for a customer, information on a collection date and time of the item at the shipper, and information on an arrival date and time when the item is to be delivered to the delivery destination. The client apparatuses 201 are, for example, PCs, tablet terminals, smartphones, wearable terminals, or the like.

The information processing apparatus 100 receives the item information from the client apparatuses 201. The information processing apparatus 100 creates delivery information for each item corresponding to the item information. The information processing apparatus 100 creates a delivery plan for collecting an item at the collection point on the collection date and time and for delivering the item to the delivery destination on the arrival date and time. The information processing apparatus 100 is, for example, a server, a PC, or the like.

To create the delivery plan, the information processing apparatus 100 performs the processing (1-1) to (1-4) described above. In a case where the item is not to be temporarily stored, the information processing apparatus 100 creates a delivery plan for delivering the item through a relay point at the lowest cost (for example, the shortest time) in the delivery network 150. In a case where the item is to be temporarily stored, the information processing apparatus 100 determines a relay point and a delivery route that are optimum for temporary storage of the item, through the route search using the various costs including the storage period. The information processing apparatus 100 creates a delivery plan based on information on the determined relay point and delivery route. This delivery plan is transmitted to, for example, the client apparatus 201 of the driver.

The client apparatus 201 of the driver receives the delivery plan created by the information processing apparatus 100 and outputs the delivery plan in a predetermined format. The output format is, for example, display on a display, output to a printer for printing, transmission to another computer, storage in a storage area, or the like. The client apparatus 201 outputs the received delivery plan so that the driver who delivers the item is able to refer to the delivery plan, for example.

In this manner, the information processing system 200 creates, each time an item is collected, a delivery plan for this item and presents the created delivery plan to the driver, so as to enable the driver to deliver the item in accordance with the delivery plan.

A case where the information processing apparatus 100 is an apparatus different from the client apparatuses 201 has been described. However, the configuration is not limited to this. For example, the receptionist may directly operate the information processing apparatus 100.

(Example of Hardware Configuration of Information Processing Apparatus 100)

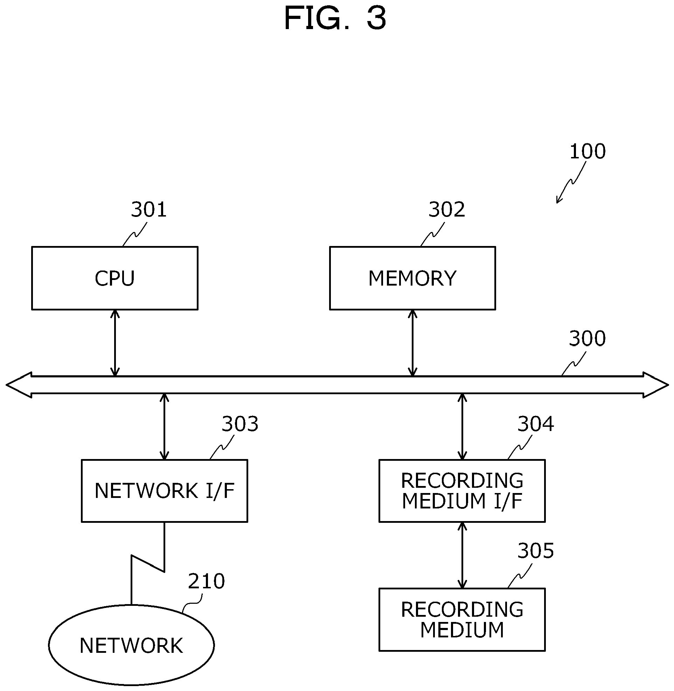

An example of a hardware configuration of the information processing apparatus 100 will be described next by using FIG. 3.

FIG. 3 is a block diagram illustrating an example of the hardware configuration of the information processing apparatus 100. In FIG. 3, the information processing apparatus 100 includes a central processing unit (CPU) 301, a memory 302, a network interface (I/F) 303, a recording medium I/F 304, and a recording medium 305. The individual components are coupled to one another through a bus 300.

The CPU 301 controls the entire information processing apparatus 100. The memory 302 includes, for example, a read-only memory (ROM), a random-access memory (RAM), a flash ROM, and the like. For example, the flash ROM or the ROM stores various programs, and the RAM is used as a work area of the CPU 301. The programs stored in the memory 302 are loaded by the CPU 301 and cause the CPU 301 to perform coded processing.

The network I/F 303 is coupled to the network 210 through a communication line and is coupled to another computer via the network 210. The network I/F 303 controls an interface between the network 210 and internal components, and controls input and output of data to and from the other computer. The network I/F 303 is, for example, a modem, a LAN adapter, or the like.

The recording medium I/F 304 controls reading and writing of data from and to the recording medium 305 in accordance with control of the CPU 301. The recording medium I/F 304 is, for example, a disk drive, a solid-state drive (SSD), a Universal Serial Bus (USB) port, or the like. The recording medium 305 is a non-volatile memory that stores data written under the control of the recording medium I/F 304. The recording medium 305 is, for example, a disk, a semiconductor memory, a USB memory, or the like. The recording medium 305 may be removable from the information processing apparatus 100.

In addition to the components described above, the information processing apparatus 100 may include, for example, a keyboard, a mouse, a display, a printer, a scanner, a microphone, a speaker, and so on. The information processing apparatus 100 may include a plurality of recording medium I/Fs 304 and a plurality of recording media 305. From the information processing apparatus 100, the recording medium I/F 304 and the recording medium 305 may be omitted.

(Example of Hardware Configuration of Client Apparatus 201)

For example, an example of a hardware configuration of the client apparatus 201 is substantially the same as the example of the hardware configuration of the information processing apparatus 100 illustrated in FIG. 3. Thus, description will be omitted.

(Example of Functional Configuration of Information Processing Apparatus 100)

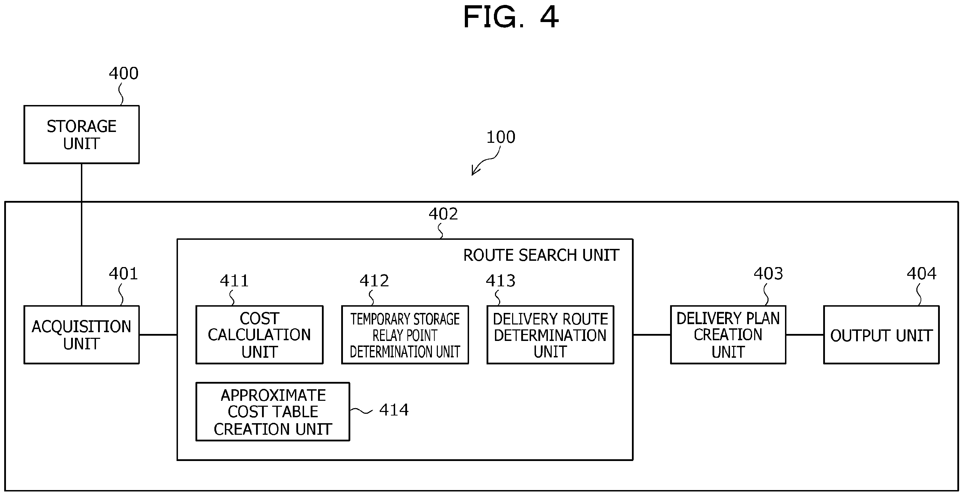

An example of a functional configuration of the information processing apparatus 100 will be described next by using FIG. 4.

FIG. 4 is a block diagram illustrating an example of a functional configuration of the information processing apparatus 100. The information processing apparatus 100 includes a storage unit 400, an acquisition unit 401, a route search unit 402, a delivery plan creation unit 403, and an output unit 404. The route search unit 402 includes a cost calculation unit 411, a temporary storage relay point determination unit 412, a delivery route determination unit 413, and an approximate cost table creation unit 414. The cost calculation unit 411, the temporary storage relay point determination unit 412, and the delivery route determination unit 413 are functional units that allow the route search unit 402 to perform a process related to a route search using a route search logic. The approximate cost table creation unit 414 is a functional unit that creates an approximate cost table in advance at a timing before the route search process, and may be provided outside the route search unit 402.

The storage unit 400 is implemented by, for example, a storage area such as the memory 302 or the recording medium 305 illustrated in FIG. 3. A case where the storage unit 400 is included in the information processing apparatus 100 illustrated in FIG. 1 will be described below. However, the configuration is not limited this. For example, there may be a case where the storage unit 400 is included in an apparatus different from the information processing apparatus 100 and stored content of the storage unit 400 may be referred to from the information processing apparatus 100.

The acquisition unit 401 to the output unit 404 function as an example of a control unit. For example, functions of the acquisition unit 401 to the output unit 404 are implemented by causing the CPU 301 to execute a program stored in the storage area such as the memory 302 or the recording medium 305 illustrated in FIG. 3 or by using the network I/F 303. A processing result obtained by each functional unit is stored in the storage area such as the memory 302 or the recording medium 305 illustrated in FIG. 3, for example.

The storage unit 400 stores various kinds of information to be referred to or updated in the process performed by each functional unit. The storage unit 400 stores the item information of an item. The item information includes, for example, information on a shipper of the item, content information of the item, information on a collection point for the shipper and on a delivery destination (delivery point) for a customer, information on a collection date and time of the item at the shipper, and information on an arrival date and time when the item is to be delivered to the delivery destination. For example, the item information is acquired by the acquisition unit 401 and is stored in the storage unit 400.

The storage unit 400 stores information related to the delivery network 150. The information related to the delivery network 150 includes, for example, information on a combination of relay points, information on a relay point where an item is temporarily storable, and information on various costs. The information on a combination of relay points is information indicating adjacent relay points that may be coupled to each other. The information on a combination of relay points and the information on a relay point where an item is temporarily storable may be stored in advance in the storage unit 400, for example.

The various costs are referred to at the time of the route search. The information of various costs includes, for example, information of the traveling cost, information of the storage cost, and information of the stop cost. The information of these various costs is acquired by the acquisition unit 401 and stored in the storage unit 400, for example. These various costs may be stored in advance in the storage unit 400, for example.

The traveling cost is a cost for moving an item. The traveling cost has, for example, a value based on a movement distance (km) between a pair of adjacent relay points. The traveling cost includes a load capacity of a mobility device such as a truck for use in delivery of an item and an additional cost caused by passing through a specific road. The additional cost has, for example, a value corresponding to a fee for passing through an expressway and a passing period during which passing through a passage restricted road is permitted.

The storage cost is a cost for temporary storage of an item in a warehouse provided at a relay point or the like. The storage cost has, for example, a value corresponding to manpower for storage of the item at the relay point, a size of a warehouse, a vacancy of the warehouse, a rent of the warehouse, or the like. The value of the storage cost increases in accordance with the storage period of the item. In the example illustrated in FIG. 1, the storage coefficient is a storage cost per one day (24 hours). In this case, the value of the cost increases in accordance with the number of days of storage of the item.

The stop cost is a value that is added each time a stop is made at a relay point. The stop cost is set, for example, for each relay point. The stop cost has a value corresponding to a time and effort to enter and take out the item into and from a warehouse.

The storage unit 400 stores information on a relay point where an item is temporarily stored. For example, in a case where the item is to be temporarily stored, information on the optimum relay point determined by the information processing apparatus 100 in the route search is stored.

The storage unit 400 stores information on a delivery route of an item. For example, information on the shortest delivery route linking the relay points determined in the route search is stored. In a case where the item is to be temporarily stored, information on the delivery route that includes a relay point where the item is to be temporarily stored and that is determined by the information processing apparatus 100 in the route search is stored.

The storage unit 400 stores information on a delivery plan. For example, the information on a delivery plan created for each item by the information processing apparatus 100 by associating the item information, the information on a relay point, and the information on a delivery route for delivering the item with each other. The information on a relay point includes information indicating that this relay point is the relay point where the item is to be temporarily stored.

The storage unit 400 stores information of an approximate cost table. The approximate cost table is referred to at the time of the route search using the cost function f(n) of Equation (1) above, and includes various kinds of information related to the approximate cost h(n).

The acquisition unit 401 acquires various kinds of information for use in the route search. The acquisition unit 401 stores the acquired various kinds of information in the storage unit 400 or outputs the acquired various kinds of information to the individual functional units. The acquisition unit 401 may output the various kinds of information stored in the storage unit 400 to the individual functional units. The acquisition unit 401 acquires the various kinds of information, based on an operation input by the receptionist for an item, for example. The way in which the various kinds of information is acquired is not limited to an operation input by the receptionist for an item, for example. The acquisition unit 401 may acquire the item information input through an operation of the client apparatus 201 or the like by a shipper of the item, and at this time, the acquisition unit 401 may acquire the various kinds of information including the rest of the item information.

The acquisition unit 401 acquires the item information for use in delivery of the item. The acquisition unit 401 acquires information related to the delivery network 150. By receiving the information related to the delivery network 150 from the other computer, the acquisition unit 401 may acquire the information related to the delivery network 150. The other computer is another apparatus such as a server, for example. For example, in a case where the information related to the delivery network 150 is stored in advance in the storage unit 400, the acquisition unit 401 may omit acquisition of the information related to the delivery network 150.

At the time of the route search for each delivery of an item, the acquisition unit 401 acquires the approximate cost table from the storage unit 400. An external apparatus of the information processing apparatus 100 may create the approximate cost table. In this case, the acquisition unit 401 acquires the approximate cost table from the external apparatus.

The approximate cost table includes information corresponding to an approximate cost used when a route search based on h(n) to the destination point is performed in a state where g(n) in Equation (1) above is located at the relay point A. At the time of the route search, the acquisition unit 401 reads the approximate cost table stored in the storage unit 400, and outputs the read approximate cost table as information of the approximate value h(n) of Equation (1) above to the route search unit 402.

Based on the item information and the information related to the delivery network 150 acquired by the acquisition unit 401 and the various costs calculated by the cost calculation unit 411, the route search unit 402 performs a process based on a predetermined route search algorithm and searches for a delivery route of the item. At this time, the route search unit 402 sets, as the departure point, a relay point near the collection point for the shipper and sets, as the destination point, a relay point near the delivery destination, and searches for a plurality of delivery routes corresponding to combinations of a plurality of relay points that may be coupled to each other.

The route search unit 402 may set the departure point and the destination point, based on the information on the collection point for the shipper or the like included in the acquired item information, and may automatically set the rest of the relay points as relay points in the route search. For example, in the case of FIG. 1, when the relay point A near the collection point is set as the departure point and the relay point C near the delivery destination is set as the destination point, the route search unit 402 sets each of the rest of the relay points B and D to F in the delivery network 150 as the relay point.

The route search unit 402 reads the approximate cost table from the storage unit 400 at the time of the route search. The route search unit 402 calculates the actual cost g(n) to a certain relay point in Equation (1) above and a cost based on the approximate cost h(n) for this relay point. By determining the approximate cost h(n) with reference to the approximate cost table created in advance, the route search unit 402 approximately calculates the cost for the remaining section from the certain relay point to the destination point C. Each time the route search unit 402 sequentially advances the relay point by one in the direction from the departure point to the destination point, the route search unit 402 performs calculation of the cost function $f(n) = g(n) + h(n)$ represented by Equation (1) above.

Based on the acquired various costs, the cost calculation unit 411 calculates the total cost of each of the plurality of delivery routes serving as candidates at the time of the route search. The total cost is a value obtained by adding up the various costs, such as, for example, the traveling cost, the storage cost, and the stop cost, for each candidate route.

At the time of the route search in a case where an item is to be temporarily stored, the temporary storage relay point determination unit 412 determines a relay point where the item is temporarily storable, based on the acquired information on the relay point. The route search unit 402 calculates, for each delivery route, the total cost including the storage cost caused in the case where the item is temporarily stored at each of the plurality of relay points where the item is temporarily storable through the route search. The temporary storage relay point determination unit 412 determines a relay point included in a delivery route having the lowest total cost, as the relay point where the item is temporarily storable.

At the time of the route search, the delivery route determination unit 413 determines a delivery route that has the lowest total cost and includes the relay point where the item is determined to be temporarily stored, from among the plurality of delivery routes serving as candidates. The delivery route determined by the delivery route determination unit 413 is a single continuous delivery route in which the relay point near the collection point for the shipper is the departure point, the relay point(s) in the delivery network 150 is (are) passed through, and the relay point near the delivery destination is the destination point. The relay point where the item is temporarily stored is located in this delivery route.

The approximate cost table creation unit 414 creates an approximate cost table in advance at a timing before the route search unit 402 performs the route search. The approximate cost table includes information corresponding to an approximate cost used when a route search based on $h(n)$ to the destination point is performed in a state where $g(n)$ in Equation (1) above is located at the relay point A.

The delivery plan creation unit 403 creates a delivery plan, for each item, including a result of the route search performed by the route search unit 402. The delivery plan creation unit 403 creates information on the delivery plan including the item information on each item, the information on the relay point(s) through which the item is delivered, and the information on the delivery route. In a case where the item is temporarily stored, the delivery plan creation unit 403 creates information on the delivery plan including information on the relay point where the item is temporarily stored.

The output unit 404 outputs the created delivery plan. The output format is, for example, display on a display, output to a printer for printing, transmission to an external apparatus through the network I/F 303, or storage in a storage area such as the memory 302 or the recording medium 305. In this manner, the output unit 404 allows a user who uses the information on the delivery plan created by the delivery plan creation unit 403 to be notified of the information of the delivery plan. The user is, for example, a driver of a truck for use in delivery of the item. The driver delivers the item in accordance with the delivery route linking the relay points indicated by the delivery plan. In a case where the delivery plan includes the relay point where the item is temporarily stored, the driver performs work of temporarily storing the corresponding item at this relay point where the item is temporarily storable.

The output unit 404 may output the delivery information to the client apparatus 201 installed at each relay point where the corresponding item is accepted. This enables the delivery status of the item to be shared among the relay points where the item is accepted and also enables an abnormality such as a non-arrival of the item to be detected at each relay point.

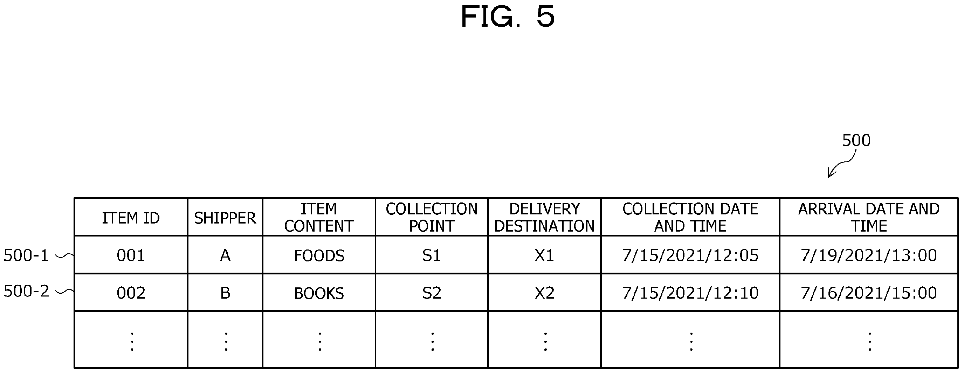

Each table of the information processing apparatus 100 will be described next. The storage unit 400 of the information processing apparatus 100 stores each of tables illustrated in FIGs. 5 to 8. By referring to each of these tables, the acquisition unit 401 of the information processing apparatus 100 outputs the information for use in the route search to the route search unit 402.

(Stored Content of Item Information Table 500)

An example of stored content of an item information table 500 will be described by using FIG. 5. For example, the item information table 500 is stored in the storage unit 400 illustrated in FIG. 4 and is implemented by a storage area such as the memory 302 or the recording medium 305 illustrated in FIG. 3.

FIG. 5 is an explanatory diagram illustrating an example of stored content of the item information table 500. As illustrated in FIG. 5, the item information table 500 includes fields for respective pieces of information of an item ID, a shipper, item content, a collection point, a delivery destination (delivery point), a collection date and time, and an arrival date and time. The item information table 500 is stored as a record 500-a in which information is set in each field based on the item information acquired each time an item is collected. a is an arbitrary integer.

In the item ID field, an item ID for identifying a collected item is set. In the shipper field, information on the shipper of the item is set. In the item content field, information such as a kind or specific item name of the item is set. In the collection point field, an address, a latitude and longitude, or the like is set as information on the collection point of the item. In the delivery destination field, an address, a delivery destination name, a latitude and longitude, or the like is set as information on the delivery destination of the item. In the collection date and time field, information on the collection date and time of the item is set. In the arrival date and time field, information on the date and time of arrival at the delivery destination of the item is set.

(Stored Content of Traveling Cost Table 600)

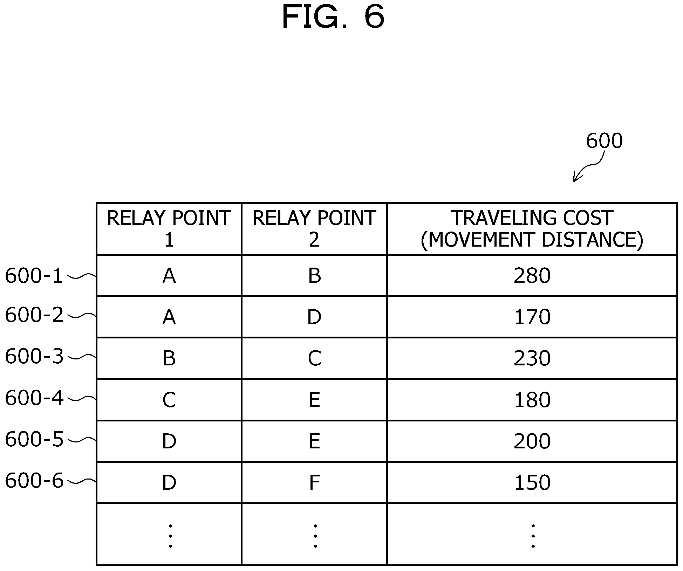

An example of stored content of the traveling cost table 600 will be described next by using FIG. 6. For example, the traveling cost table 600 is stored in the storage unit 400 illustrated in FIG. 4 and is implemented by a storage area such as the memory 302 or the recording medium 305 illustrated in FIG. 3.

FIG. 6 is an explanatory diagram illustrating an example of stored content of the traveling cost table 600. As illustrated in FIG. 6, the traveling cost table 600 includes fields for respective pieces of information of a relay point 1, a relay point 2, and a traveling cost. The traveling cost table 600 indicates information on each relay point in the delivery network 150 and information on the traveling cost between the relay points, and is stored as a record 600-b in which the traveling cost between the relay points 1 and 2 are set in each field. b is an arbitrary integer.

In the relay point 1 field, one relay point is set. In the relay point 2 field, another relay point is set which is adjacent to the relay point 1 and between which an item may be moved bidirectionally. In the traveling cost field, the traveling cost between the relay points 1 and 2 is set. The traveling cost is, for example, a value corresponding to a movement distance (traveling distance) over which the item is moved between the relay points 1 and 2.

(Stored Content of Storage Cost Table 700)

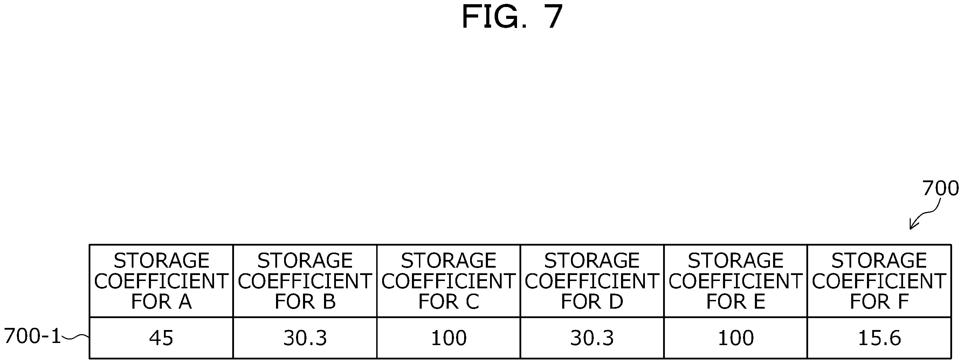

An example of stored content of the storage cost table 700 will be described next by using FIG. 7. For example, the storage cost table 700 is stored in the storage unit 400 illustrated in FIG. 4 and is implemented by a storage area such as the memory 302 or the recording medium 305 illustrated in FIG. 3.

FIG. 7 is an explanatory diagram illustrating an example of stored content of the storage cost table 700. As illustrated in FIG. 7, the storage cost table 700 includes fields for respective pieces of information of the storage costs for the respective relay points where an item is temporarily storable. The storage cost table 700 indicates information on a storage cost in a case where an item is temporarily stored at each relay point in the delivery network 150 and is stored as a record 700-1 in which storage coefficients for respective relay points are set in the respective fields.

In the example illustrated in FIG. 7, the item is temporarily storable at all the relay points A to F in the delivery network 150. In the example illustrated in FIG. 7, the storage coefficient is stored as the storage cost in the storage cost table 700. The storage coefficient is, for example, a coefficient that causes the storage cost of the item to increase as the storage period increases. The storage coefficient is, for example, a coefficient that causes the storage cost of the item to increase as a size or weight of the item increases.

At the time of the route search, the cost calculation unit 411 refers to the storage cost table 700 and calculates the storage cost by multiplying the storage coefficient of the corresponding relay point by the storage period of temporary storage.

(Stored Content of Stop Cost Table 800)

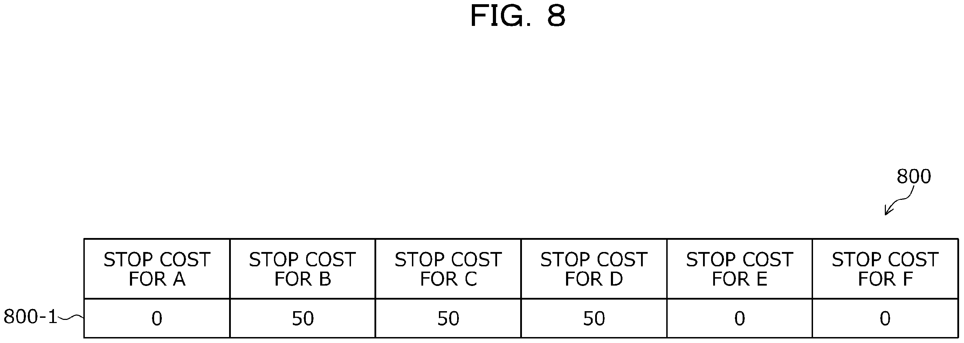

An example of stored content of the stop cost table 800 will be described next by using FIG. 8. For example, the stop cost table 800 is stored in the storage unit 400 illustrated in FIG. 4 and is implemented by a storage area such as the memory 302 or the recording medium 305 illustrated in FIG. 3.

FIG. 8 is an explanatory diagram illustrating an example of stored content of the stop cost table 800. As illustrated in FIG. 8, the stop cost table 800 includes fields for pieces of information on the stop costs for respective relay points. For example, the stop cost table 800 indicates information on the cost caused by unloading and loading of an item at each relay point and is stored as a record 800-1 in which the stop costs for the respective relay points are set in the respective fields.

For example, at the time of the route search, the cost calculation unit 411 refers to the stop cost table 800 and calculates the stop cost by adding up the stop cost each time the corresponding relay point is passed. Although details will be described later, at the time of the route search, the route search is performed including a route returning to a relay point that has been passed once. In a case where a certain replay point is passed (a stop is made) and then this relay point is passed again in a return path, the cost calculation unit 411 calculates the stop cost for the two stops at this relay point. A value "0" of the stop cost illustrated in FIG. 8 indicates that the stop cost is not caused because the item is not unloaded and loaded, for example.

(Approximate Cost Table 900)

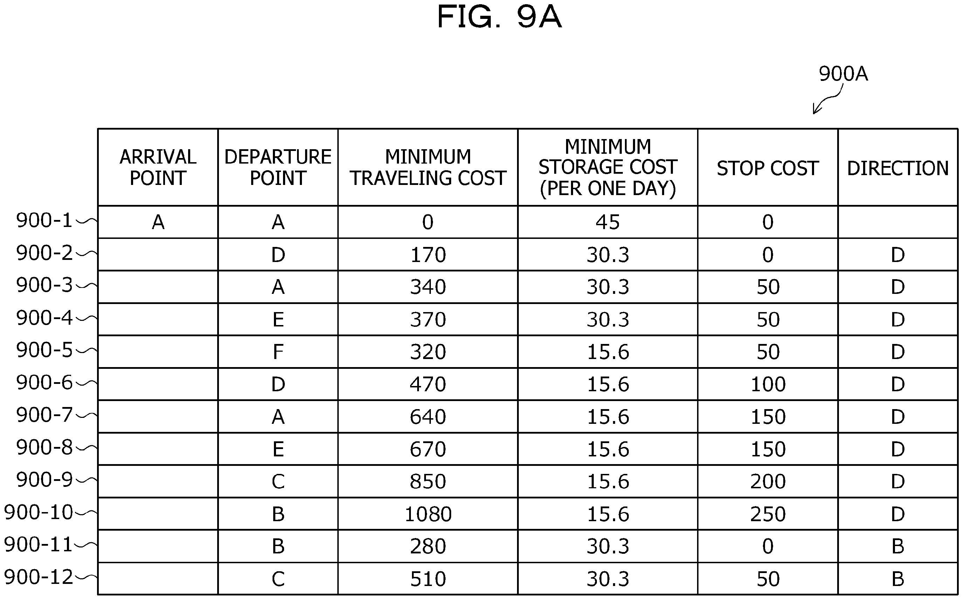

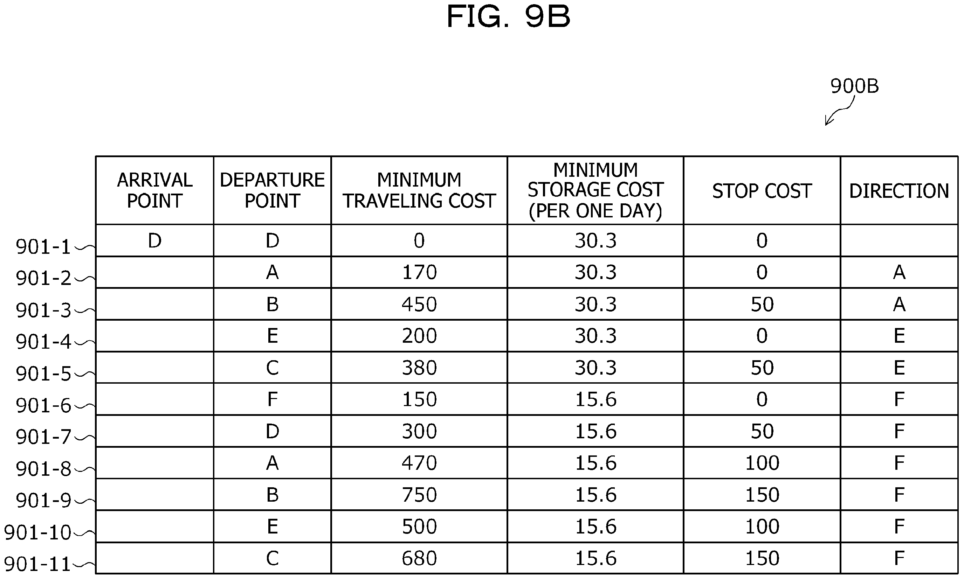

Next, the approximate cost table 900 created by the information processing apparatus 100 will be described. The approximate cost table 900 illustrated in FIG. 9A, FIG. 9B, or the like is stored in the storage unit 400 of the information processing apparatus 100. At a timing before the route search unit 402 performs the route search process, the information processing apparatus 100 (the approximate cost table creation unit 414) refers to each of the tables 500 to 800 illustrated in FIGs. 5 to 8 acquired by the acquisition unit 401 and creates the approximate cost table 900. For example, the approximate cost table 900 is referred to in order to calculate an approximate cost represented by h(n) when the route search unit 402 performs the route search process using the cost function f(n) represented by Equation (1) above.

(Stored Content of Approximate Cost Table 900)

An example of stored content of the approximate cost table 900 will be described by using FIGs. 9A and 9B. For example, the approximate cost table 900 is stored in the storage unit 400 illustrated in FIG. 4 and is implemented by a storage area such as the memory 302 or the recording medium 305 illustrated in FIG. 3.

FIG. 9A is an explanatory diagram illustrating an example of stored content of an approximate cost table 900A. The approximate cost table 900 is created for each single arrival point (relay point). FIG. 9A illustrates the approximate cost table 900A created when the relay point A is set as the arrival point. The approximate cost table 900A includes fields for respective pieces of information of, for one arrival point, a minimum traveling cost, a minimum storage cost, a stop cost, and a direction for each of a plurality of departure points, and is stored as a record 900-c in which information is set in each field. c is an arbitrary integer.

The approximate cost table 900A illustrated in FIG. 9A is created in advance by the approximate cost table creation unit 414, based on the arrangement of the individual relay points A to F illustrated in FIG. 1 and the information on the various costs (FIGs. 6 to 8).

The approximate cost table 900A for the arrival point A illustrated in FIG. 9A is referred to in order to calculate an approximate cost of h(n) in a state where g(n) of Equation (1) above is located at the relay point A at the time of the route search. The arrival point A illustrated in FIG. 9A corresponds to a case of n = A in Equation (1) above. In creating an approximate cost table, the approximate cost table creation unit 414 sets a point n+1 as the departure point, calculates various costs from the departure point to the arrival point A, and stores the various costs in the approximate cost table 900A.

As the minimum traveling cost, the minimum traveling cost among traveling costs from the departure point to the arrival point is set. As the minimum storage cost, the storage cost of the relay point having the lowest storage cost among the individual relay points is set. In the example illustrated in FIG. 9A, a storage coefficient in a case where an item is stored per one day is set as the storage cost. As the stop cost, the stop cost of each relay point is set. In a case where the delivery route passes through the same relay point in a roundtrip manner, the stop cost increases in accordance with the number of times of passing. In a case where there is a relay point passed in a direction from the point n+1 to the point n in the route search, the relay point to be passed is set in the direction field.

In FIG. 9A, for example, a route indicated by a record 900-2 corresponds to the relay points A-D. In this case, the approximate cost table creation unit 414 sets the traveling cost "170" between the relay points A and D as the minimum traveling cost, sets the storage cost "30.3" of the relay point B as the minimum storage cost, and sets "0" of the relay point A as the stop cost.

For example, a route indicated by a record 900-3 corresponds to the relay points A-D-A. In this case, the approximate cost table creation unit 414 sets the traveling cost "340" for a section of the relay points A-D-A as the minimum traveling cost, sets the storage cost "30.3" of the relay point B as the minimum storage cost, and sets "50" of the relay point D as the stop cost.

For example, a route indicated by a record 900-9 corresponds to the relay points A-D-F-D-E-C. In this case, the approximate cost table creation unit 414 sets the traveling cost "850 (170 + 150 + 150 + 200 + 180)" for a section of the relay points A-D-F-D-E-C as the minimum traveling cost. The approximate cost table creation unit 414 sets the storage cost "15.6" of the relay point F as the minimum storage cost, and sets "150 (50 + 50 + 50)" as the stop cost which results from two stops at the relay point D and one stop at the relay point C.

FIG. 9B is an explanatory diagram illustrating an example of stored content of an approximate cost table 900B. FIG. 9B illustrates the approximate cost table 900B created when the relay point D is set as the arrival point. The approximate cost table creation unit 414 also creates each of the approximate cost tables 900 for the other relay points B, C, E and F in substantially the same manner as described above.

(Example of Process of Creating Approximate Cost Table 900)

A process of creating the approximate cost table 900 is implemented by, for example, the CPU 301 illustrated in FIG. 3 and a storage area such as the memory 302 or the recording medium 305 illustrated in FIG. 3.

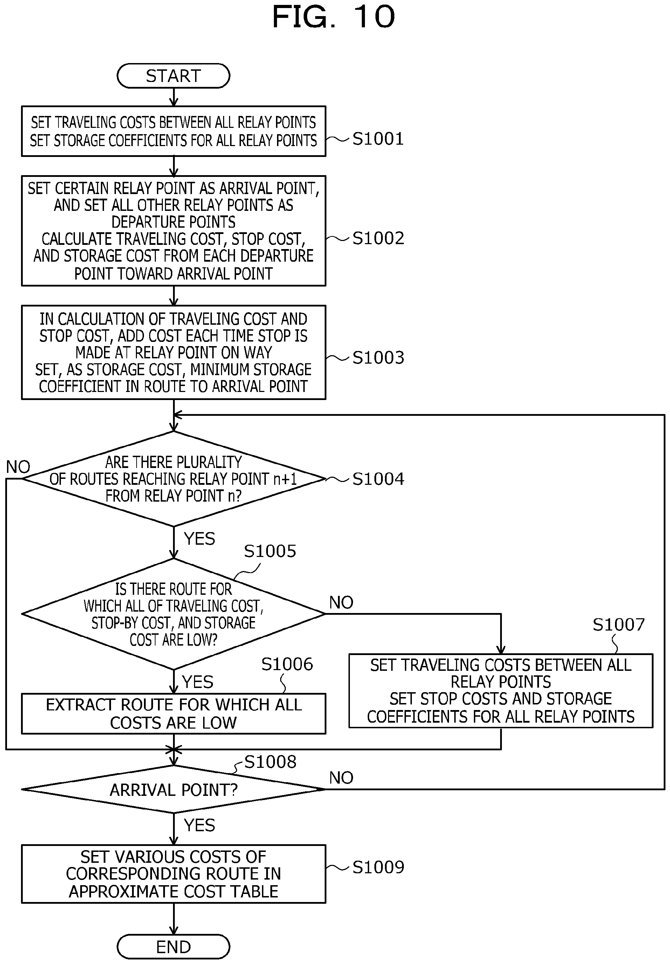

FIG. 10 is a flowchart illustrating an example of a procedure of an approximate cost calculation process. The information processing apparatus 100 (for example, the approximate cost table creation unit 414) performs the process illustrated in FIG. 10 in advance at a timing before the route search process is performed, and stores the approximate cost table 900 created through the process in the storage unit 400. In the process illustrated in FIG. 10, an example of the process of creating the approximate cost table 900 corresponding to the approximate cost h(n) used in the cost function f(n) represented by Equation (1) above will be described.

First, the information processing apparatus 100 sets traveling costs between all the relay points and sets storage coefficients for all the relay points (step S1001). For example, by referring to the traveling cost table 600 (FIG. 6), the information processing apparatus 100 combines relay points from among all the relay points, and sets the traveling cost between the relay points corresponding to each of the combinations in the approximate cost table 900. By referring to the storage cost table 700 (FIG. 7), the information processing apparatus 100 sets the storage coefficients of all the relay points in the approximate cost table 900.

Next, the information processing apparatus 100 performs processing of calculating an approximate cost represented by h(n) of Equation (1) above (step S1002). For example, the information processing apparatus 100 sets a certain relay point as the arrival point and sets all the other relay points as the departure points. The information processing apparatus 100 then calculates each of the traveling cost, the stop cost, and the storage cost, from each of the plurality of departure points toward the arrival point.

In step S1002, in calculation of the traveling cost and the stop cost, the information processing apparatus 100 adds up the cost each time a stop is made at a relay point on the way. As for the storage cost, the information processing apparatus 100 sets, as the minimum storage coefficient, the minimum storage coefficient among the storage coefficients of the respective relay points in the route to the arrival point (step S1003).

Next, the information processing apparatus 100 determines whether or not there are a plurality of routes that reach the relay point n+1 from the relay point n (step S1004). If there are a plurality of routes that reach the relay point n+1 from the relay point n (step S1004: Yes), the information processing apparatus 100 proceeds to processing in step S1005. On the other hand, if there are not a plurality of routes that reach the relay point n+1 from the relay point n (step S1004: No), the information processing apparatus 100 proceeds to processing in step S1008.

In step S1005, the information processing apparatus 100 determines whether or not there is a route for which all of the traveling cost, the stop cost, and the storage cost are low (step S1005). If there is a route for which all of the traveling cost, the stop cost, and the storage cost are low (step S1005: Yes), the information processing apparatus 100 proceeds to processing in step S1006. On the other hand, if there is not a route for which all of the traveling cost, the stop cost, and the storage cost are low (step S1005: No), the information processing apparatus 100 proceeds to processing in step S1007.

In step S1006, the information processing apparatus 100 extracts the corresponding route for which all the costs are low (step S1006), and proceeds to the processing in step S1008. In step S1007, the information processing apparatus 100 sets the traveling costs between all the relay points, sets the stop costs and the storage coefficients for all the relay points (step S1007), and proceeds to the processing in step S1008.

In step S1008, the information processing apparatus 100 determines whether or not the departure point has reached the arrival point (step S1008). If the departure point has reached the arrival point (step S1008: Yes), the information processing apparatus 100 proceeds to processing in step S1009. On the other hand, if the departure point has not reached the arrival point (step S1008: No), the information processing apparatus 100 returns to the processing in step S1004.

In step S1009, the information processing apparatus 100 sets various costs of this extracted route in the approximate cost table 900 (step S1009). The information processing apparatus 100 ends the process of creating the approximate cost table 900 described above.

Through the process illustrated in FIG. 10, the information processing apparatus 100 creates the approximate cost table 900A corresponding to the one relay point A illustrated in FIG. 9A. The information processing apparatus 100 also creates the approximate cost table 900B for the one relay point D illustrated in FIG. 9B. Through the process illustrated in FIG. 10, the information processing apparatus 100 creates the approximate cost tables 900 for all the relay points A to F. Thereafter, each time an item to be temporarily stored is delivered, the information processing apparatus 100 performs a route search process for this item and refers to the approximate cost table 900 during this route search process.

(Example of Route Search Process for Delivery of Item)

The route search process for delivery of an item is implemented by, for example, the CPU 301 illustrated in FIG. 3 and a storage area such as the memory 302 or the recording medium 305 illustrated in FIG. 3.

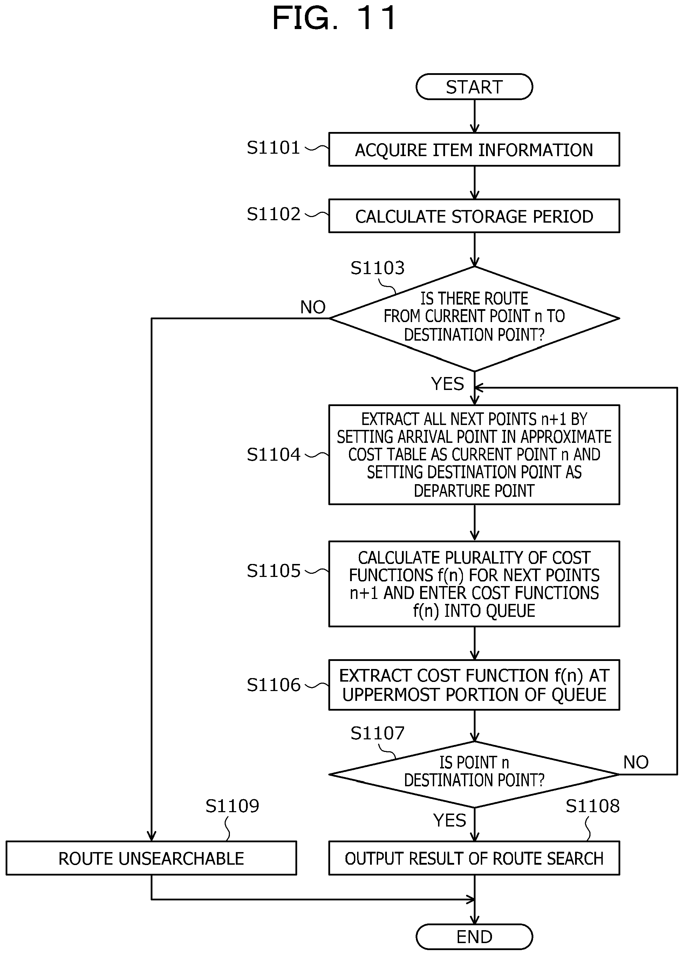

FIG. 11 is a flowchart illustrating an example of a procedure of the route search process. The process illustrated in FIG. 11 is performed by the control unit (the acquisition unit 401 to the output unit 404) of the information processing apparatus 100. The information processing apparatus 100 performs the route search process based on the cost function f(n) represented by Equation (1) above. At the time of this route search, the information processing apparatus 100 refers to the approximate cost table 900 created in advance to correspond to the approximate cost h(n).

The information processing apparatus 100 starts the route search process in response to acquiring the item information (step S1101). For example, each time the information processing apparatus 100 acquires the item information (see FIG. 5), the information processing apparatus 100 starts a route search for the corresponding item.

Next, the information processing apparatus 100 calculates the storage period of the item (step S1102). For example, based on the delivery period 1 in a case where delivery is performed on a designated date and time indicated by the item information and the delivery period 2 in a case where delivery is performed at the earliest in the delivery network 150, the information processing apparatus 100 determines whether or not a calculated result of the storage period (the delivery period 1 - the delivery period 2) is greater than 0. For example, in a case where the delivery period 1 is four days due to the time designation and the delivery period 2 is two days, the information processing apparatus 100 determines that the difference is two days and that the item is to be temporarily stored for a storage period of two days (48 hours) at any of the relay points in the delivery network 150.

In the process illustrated in FIG. 11, a processing example assuming that the item is temporarily stored will be described. For example, if the item is not to be temporarily stored, the process illustrated in FIG. 11 ends. An existing route search process is then performed, so that the item is delivered at the earliest.

After the processing in step S1102, the information processing apparatus 100 performs a route search using the cost function f(n) represented by Equation (1) above. At this time, the information processing apparatus 100 determines whether or not there is a route from the current point n to the destination point (step S1103). If there is a route from the current point n to the destination point (step S1103: Yes), the information processing apparatus 100 proceeds to processing in step S1104. On the other hand, if there is not a route from the current point n to the destination point (step S1103: No), the information processing apparatus 100 proceeds to processing in step S1109. In step S1109, the information processing apparatus 100 determines that the route is unsearchable (step S1109).

In step S1104, the information processing apparatus 100 refers to the approximate cost table 900 corresponding to the current point n, and extracts all the next points n+1 by setting the arrival point as the current point n and setting the destination point as the departure point (step S1104). In this case, there are a plurality of next points n+1 for the current point n. For example, when the current point n is the relay point A and the destination point is the relay point C, there are two next points n+1 that are the relay points B and D.

When the current point n is the relay point A, the information processing apparatus 100 refers to the approximate cost table 900A illustrated in FIG. 9A in order to calculate the approximate cost h(n). In the following loop processing, for example, the current point n is advanced toward the destination point C by one and is updated to, for example, the relay point B. At this time, the information processing apparatus 100 refers to the approximate cost table 900B illustrated in FIG. 9B in order to calculate the approximate cost h(n).

Next, the information processing apparatus 100 calculates, based on Equation (1) above, the cost function f(n) for each of the plurality of next points n+1 extracted in step S1104, and enters the cost function f(n) into a queue (step S1105). The queue is implemented by a storage area such as the memory 302 or the recording medium 305 of the information processing apparatus 100, for example. For example, a part of the storage area used by the route search unit 402 illustrated in FIG. 4 is used as the queue. The route search unit 402 enters the respective cost functions f(n) for the plurality of points n+1 into the queue. At this time, the route search unit 402 enters information on the point n+1 having the lower cost function f(n) to an upper portion of the queue. In the uppermost portion of a list in the queue, information on the point n+1 having the lowest cost function f(n) is entered.

Next, the information processing apparatus 100 extracts the information on the point n+1 indicated by the cost function f(n) located at the uppermost portion of the list in the queue (step S1106). Next, the information processing apparatus 100 determines whether or not the point n is the destination point (for example, the destination point C) (step S1107). If the point n is not the destination point (step S1107: No), the information processing apparatus 100 advances the processing target to the next relay point toward the arrival point side by one, and returns to the processing in step S1104. On the other hand, if the point n is the destination point (step S1107: Yes), the information processing apparatus 100 outputs a result of the route search (step S1108). After the processing in step S1108 or step S1109, the information processing apparatus 100 ends the route search process described above.

(Specific Example of Route Selection Process)

A specific example of route selection in accordance with the route search process illustrated in FIG. 11 will be described next. The route selection process performed when a plurality of cost functions f(n) are calculated for the next points from the departure point A will be described mainly in terms of the approximate cost h(n). In this description, an example of selecting a route not including the storage cost will be described.

The information processing apparatus 100 calculates the approximate cost by using a method of adding and spreading various costs as if a wave spread in all directions from the destination point. The information processing apparatus 100 calculates the approximate cost for a wave returning in the direction in which the wave has come as well. The information processing apparatus 100 uses, as the various costs, the traveling cost and the stop cost, which are fixed values, and the storage cost, which changes in accordance with the storage period, and when a losing (dominated) wave disappears and all the wavefronts disappear in all the directions, ends the calculation. When a relay point (node) having a low storage cost is reached, the wave propagates therefrom without disappearing. The information processing apparatus 100 selects all the relay points as start points of a wavefront that is the destination point, and performs the process.

For example, in the step S1104 illustrated in FIG. 11, the information processing apparatus 100 extracts the relay point B and the relay point D that serve as the next relay points of the relay point A. In step S1105, the information processing apparatus 100 calculates the cost function f(B) or f(D) in a case where the processing target is moved forward to the relay point B or D, and enters each of the cost function f(B) or f(D) into the queue. At this time, since the value of the cost function f(B) is lower than that of the cost function f(D), the information on the cost function f(B) is located at the uppermost potion of the list of the queue. The information processing apparatus 100 also calculates the approximate cost h(n) with reference to the approximate cost table 900.

Based on Equation (1) (f(n) = g(n) + h(n)), the information processing apparatus 100 calculates each of the cost functions f(B) and f(D) as follows.

$$f(B) = (280 + 50) + 230 = 560$$

$$f(D) = (170 + 50) + (380 + 50) = 650$$

The information processing apparatus 100 calculates the cost function f(B) by adding an approximate cost (230) caused from the relay point B to the destination point C, to the cost g(B) = (the traveling cost (280) + the stop cost (50)) caused up to this relay point B. At this time, the information processing apparatus 100 determines an approximate cost related to the relay point B with reference to the approximate cost table 900.

The information processing apparatus 100 also calculates the cost function f(D) by adding a cost (the traveling cost (380) + the stop cost (50)) caused from the relay point D to the destination point C, to the cost g(D) = (the traveling cost (170) + the stop cost (50)) caused up to this relay point D.

In step S1106, since neither the relay point B nor the relay point D is the destination point C, the information processing apparatus 100 extracts the cost function f(B) having the lower cost, and calculates the cost functions f(C) and f(A) for the relay points A and C that are linked to the relay point B as follows.

$$f(C) = (510 + 50) = 560$$

$$f(A) = (560 + 100) + (510 + 50) = 1220$$

The traveling cost (510) of g(n) of the cost function f(C) is the traveling cost for a section of the relay points A-B-C. The traveling cost (560) of g(n) of the cost function f(A) is the traveling cost for a section of the relay points A-B-A, and the approximate cost (510) of h(n) of the cost function f(A) is the traveling cost for the section of the relay points A-B-C.

Because the relay point C is the destination point, the information processing apparatus 100 ends the route search process. The total cost at this time is 560. The information processing apparatus 100 also determines that the delivery route is a route that passes sequentially through the relay point A, the relay point B, and the relay point C.

As indicated by the cost function f(A), there is also a (return) delivery route from the relay point B to the relay point A. In this case, the approximate cost h(n) from the relay point A is further added in addition to the cost of returning from the relay point B to the relay point A, so that the cost becomes high. Thus, the information processing apparatus 100 does not select this delivery route corresponding to the cost function f(A).

(Specific Example of Route Search Process)

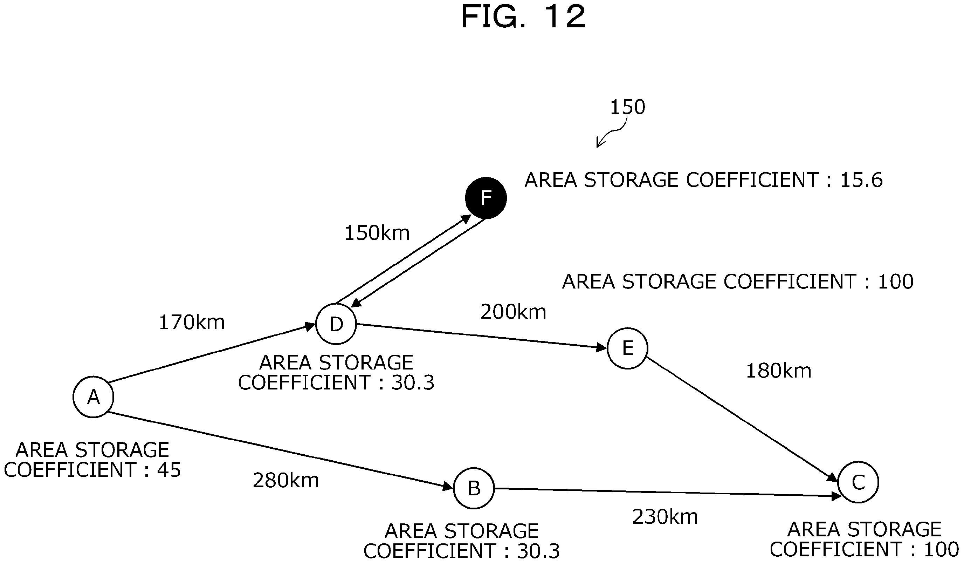

Next, a specific example of a route search process according to the route search process illustrated in FIG. 11 will be described with reference to FIGs. 12 to 14.

FIG. 12 is an explanatory diagram illustrating an example of the various costs. As illustrated in FIG. 12, the relay points A to F are arranged in the same manner as in FIG. 1, and the traveling costs are also the same as those in FIG. 1. Storage coefficients are illustrated as the respective storage costs of the relay points A to F. The information processing apparatus 100 performs a calculation of "storage cost = storage coefficient × storage period". It is assumed that the stop cost is 50 uniformly for the individual relay points A to F. Each time the same relay point is passed, 50 is added as the stop cost.

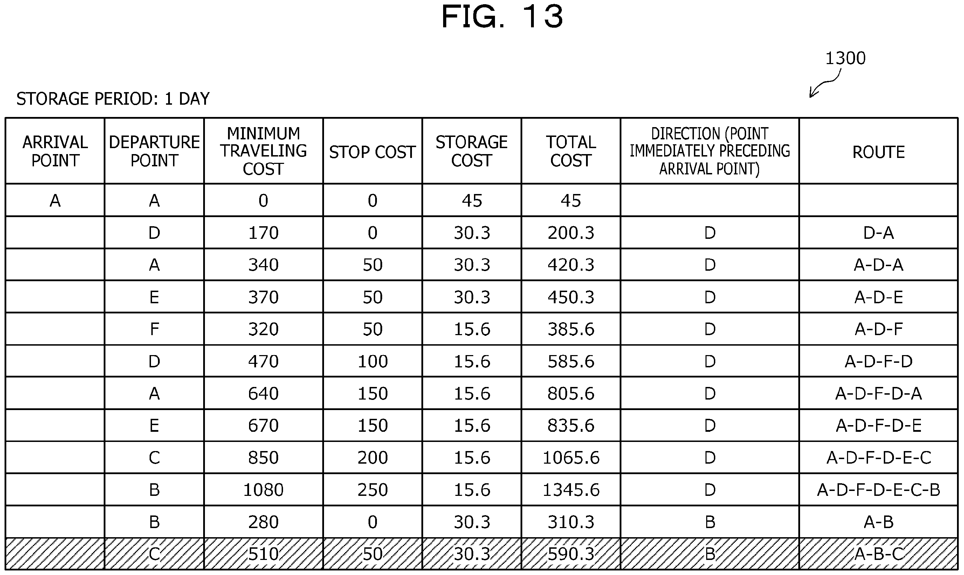

FIG. 13 is an explanatory diagram illustrating an approximate cost table in a case where the storage period is one day. An approximate cost table 1300 illustrated in FIG. 13 corresponds to the relay points and the various costs illustrated in FIG. 12, and the relay point A is set as the arrival point and each of the relay points A to F is set as the departure point. For convenience, FIG. 13 illustrates total costs (g(n) +h(n)) and routes.

The routes indicate a plurality of routes that reach the arrival point from the departure point. For example, in a case where the arrival point is the relay point A and the departure point is the relay point C, there are a route A-D-F-D-E-C and a route A-B-C. For example, for the route A-D-F-D-E-C, the minimum traveling cost is the traveling cost 170 + 150 + 150 + 200 + 180 = 850 for the section of the relay points A-D-F-D-E-C, and the stop cost is 4 × 50 = 200 since there are four relay points D, F, E, and C. The storage cost is a cost for one day (24 hours) at the relay point F and thus is the storage coefficient (15.6) × 1 = 15.6. The total cost is 1065.6, and the direction is the relay point D immediately preceding the arrival point.

For the route A-B-C, the minimum traveling cost is the traveling cost 280 + 230 = 510 for a section of the relay points A-B-C and the stop cost is 50 at the relay point B. The storage cost is a cost for one day (24 hours) and thus is the storage coefficient of the relay point B (30.3) × 1 = 30.3. The total cost is 590.3, and the direction is the relay point B immediately preceding the arrival point.

It is assumed that in a case where the storage period is one day, the information processing apparatus 100 determines that the delivery route obtained through the route search in which the total cost is minimized by using the cost function f(n) is the route A-B-C. In this case, it is assumed that the route selected in the approximate cost table 1300 corresponding to the approximate cost h(n) is the route A-B-C at the lowermost portion.

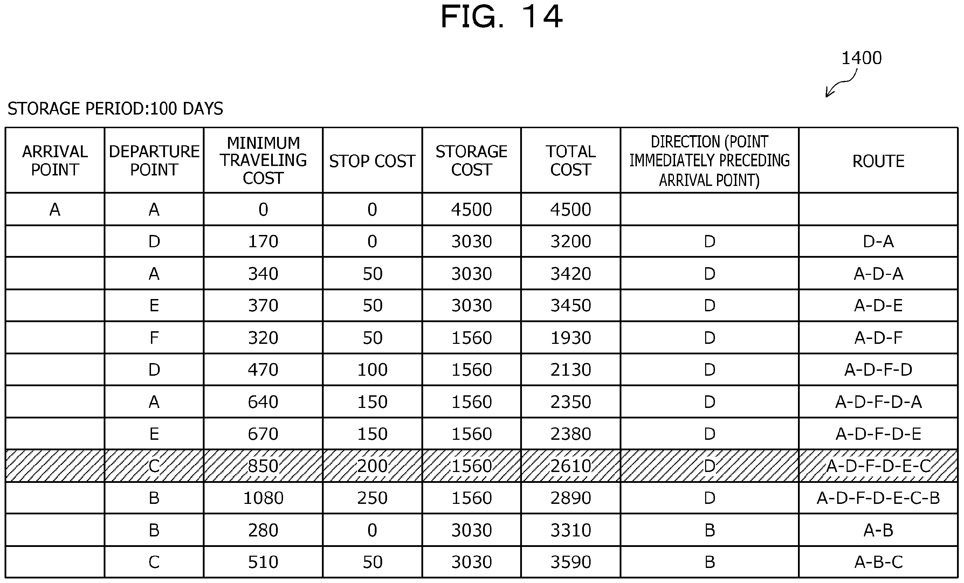

FIG. 14 is an explanatory diagram illustrating an approximate cost table in a case where the storage period is 100 days. As a result of the storage period changing from one day to 100 days, the values of the storage cost and the total cost in the approximate cost table 1400 in FIG. 14 are different from those in the approximate cost table 1300 in FIG. 13.

For example, for the route A-D-F-D-E-C, the minimum traveling cost is the traveling cost 170 + 150 + 150 + 200 + 180 = 850 for the section of the relay points A-D-F-D-E-C, and the stop cost is 4 × 50 = 200 since there are four relay points D, F, E, and C. The storage cost is a cost for 100 days (2400 hours) at the relay point F and thus is the storage coefficient (15.6) × 100 = 1560. The total cost is 2610, and the direction is the relay point D immediately preceding the arrival point.

For the route A-B-C, the minimum traveling cost is the traveling cost 280 + 230 = 510 for the section of the relay points A-B-C and the stop cost is 50 at the relay point B. The storage cost is a cost for 100 days (2400 hours) and thus is the storage coefficient of the relay point B (30.3) × 100 = 3030. The total cost is 3590, and the direction is the relay point B immediately preceding the arrival point.

At the time of the route search corresponding to the storage period of 100 days, the information processing apparatus 100 calculates the cost functions f(D) and f(B) as follows.

There are two candidates for the cost function f(D), which are assumed to be f(D1) and f(D2).

$$f(D1) = g(n) + h(n) = (170 + 50) + (680 + 150 + 1560) = 2610$$

(corresponding to the route A-D-F-D-E-C)

$$f(D2) = g(n) + h(n) = (170 + 50) + (380 + 50 + 3030) = 3680$$

(corresponding to the route A-D-E-C not including the relay point F)

$$f(B) = g(n) + h(n) = (280 + 50) + (230 + 3030) = 3590$$

(corresponding to the route A-B-C)

In response to calculating each of the cost functions f(D1), f(D2), and f(B), the information processing apparatus 100 enters the cost functions f(D1), f(D2), and f(B) in a queue. The information processing apparatus 100 then extracts the cost function f(D1) that is located at the uppermost potion of the list of the queue and for which the total cost is lowest, and performs substantially the same process for each of the next relay points F, E, and A. After the route search process is performed for all the relay points, the information processing apparatus 100 finally determines, as the delivery route, a route corresponding to the cost function f(D1) with the lowest total cost.

A comparison is made between FIGs. 13 and 14. In a case where the storage period is one day, the route A-B-C illustrated in FIG. 13 is selected. The total cost in this case is 590.3. By contrast, in a case where the storage period is 100 days, the route A-D-F-D-E-C illustrated in FIG. 14 is selected. The total cost in this case is 2610. In the case where the storage period of 100 days, the total cost of the route A-B-C is 3590, which is higher than the total cost (2610) of the route A-D-F-D-E-C.

By adding a parameter of the storage period to the storage cost in the route search described above, the information processing apparatus 100 may cope with a change in storage period of an item and selects a route having the lowest total cost of the various costs including the storage cost.

As described above, the information processing apparatus 100 may acquire a storage period of an item in a case where the item is moved from a departure point to a destination point. The information processing apparatus 100 may acquire a traveling cost for moving the item between a plurality of points including the departure point, the destination point, and one or more relay points in the case where the item is moved to the destination point. The information processing apparatus 100 may acquire information that indicates a storage coefficient for use in calculation of a storage cost of the item in accordance with the storage period of the item at each point among the plurality of points and may acquire the acquired storage period. The information processing apparatus 100 may search for a route along which the item is moved from the departure point to the destination point, based on the acquired storage period of the item, the acquired traveling cost, the acquired storage coefficient and storage period. Thus, in a case where the item is to be stored, the information processing apparatus 100 may search for an appropriate route in accordance with the storage period.

The information processing apparatus 100 may, in the search process, search for the route along which the item is moved from the departure point to the destination point such that a value of a cost function that includes the traveling cost and the storage cost of the item is optimized, the traveling cost being a cost between the individual points from the departure point to the destination point in the case where the item is moved from the departure point to the destination point, the storage cost being a cost in accordance with the acquired storage period and being based on the storage coefficient at any point from the departure point to the destination point. Thus, the information processing apparatus 100 may obtain the optimum point where the item is to be stored and the optimum route, through optimization using the cost function including the traveling cost and the storage cost.

In the information processing apparatus 100, the information may further indicate a stop cost of the item in a case where a stop is made at each relay point among the one or more relay points. Thus, the information processing apparatus 100 may obtain the appropriate point where the item is to be stored and the appropriate route, through optimization including the stop cost.

The information processing apparatus 100 may, in the search process, search for the route along which the item is moved from the departure point to the destination point in a case where the acquired storage period is longer than 0. Thus, the information processing apparatus 100 may search for a route in a case where the item is to be stored.

The information processing apparatus 100 may accept designation of the departure point, the destination point, and the one or more relay points among the plurality of points. Thus, the information processing apparatus 100 may search for a route linking the designated departure point, the designated destination point, and the designated one or more relay points to each other.

In the information processing apparatus 100, the traveling cost may have a characteristic that a value of the traveling cost increases as a distance between the plurality of points increases. Thus, the information processing apparatus 100 may search for a route for which traveling cost is low.

In the information processing apparatus 100, the storage cost may have a characteristic that a value of the storage cost increases as the storage period of the item increases. Thus, the information processing apparatus 100 may search for a route for which the storage cost according to the storage period is low.

In the information processing apparatus 100, the storage coefficient may be a coefficient that causes the storage cost of the item to increase as a size or weight of the item increases. Thus, by using the storage coefficient according to the size or weight of the item, the information processing apparatus 100 may search for a route for which the storage cost is low.

The information processing apparatus 100 may, in the search process, each time a point of interest is moved forward by one from the departure point to the destination point based on the information and the acquired storage period, a route along which the item is moved is searched for based on an actual value of a cost to the relay point where the point of interest is located and an approximate cost calculated in advance for each of a plurality of routes that links rest of points from the relay point to the destination point. Thus, the information processing apparatus 100 may quickly and accurately search for a route by using the approximate cost.

The route search method described in the present embodiment may be implemented as a result of a computer such as a PC or workstation executing a program prepared in advance. A route search program described in the present embodiment is recorded on a computer-readable recording medium and is executed by being read from the recording medium by a computer. The recording medium is a hard disk, a flexible disk, a compact disc (CD)-ROM, a magneto-optical disk (MO), a digital versatile disc (DVD), or the like. The route search program described in the present embodiment may be distributed via a network such as the Internet.

**Claims**

1. A route search program that causes at least one computer to execute a process, the process comprising:

   acquiring a storage period of an item for each point of a plurality of points in a case where the item is moved from a departure point to a destination point, the plurality of points including the departure point, the destination point, and one or more relay points; and
   searching for a route along which the item is moved from the departure point to the destination point based on a traveling cost, storage information, and the acquired storage period, a traveling cost indicating a cost for moving the item between each two points of the plurality of points, the storage information indicating a storage coefficient being used for calculation of a storage cost of the item at each point of the plurality of points in accordance with the storage period.

2. The route search program according to claim 1, wherein in the searching,
   the searching for includes searching the route so that a value of a cost function that includes the traveling cost and the storage cost is optimized.

3. The route search program according to claim 1 or 2, wherein
   the storage information further indicates a stop cost of the item in a case where the item is made stop at each relay point among the one or more relay points.

4. The route search program according to any one of claims 1 to 3, wherein
   the searching includes searching for the route in a case where the acquired storage period is longer than 0.

5. The route search program according to any one of claims 1 to 4, the process further comprising:
   accepting designation of the departure point, the destination point, and the one or more relay points among the plurality of points.

6. The route search program according to any one of claims 1 to 5, wherein
   the traveling cost has a characteristic that a value of the traveling cost increases as a distance between the plurality of points increases.

7. The route search program according to any one of claims 1 to 6, wherein
   the storage cost has a characteristic that a value of the storage cost increases as the storage period of the item increases.

8. The route search program according to any one of claims 1 to 7, wherein
   the storage coefficient is a coefficient that causes the storage cost of the item to increase as a size or weight of the item increases.

9. The route search program according to any one of claims 1 to 8, wherein
   the searching includes searching for each time a point of interest is moved forward by one from the departure point to the destination point based on the information and the acquired storage period, a route along which the item is moved based on an actual value of a cost to the relay point where the point of interest is located and a cost calculated in advance for each of a plurality of routes that links rest of points from the relay point to the destination point.

10. A route search method for a computer to execute a process comprising:

    acquiring a storage period of an item for each point of a plurality of points in a case where the item is moved from a departure point to a destination point, the plurality of points including the departure point, the destination point, and one or more relay points; and
    searching for a route along which the item is moved from the departure point to the destination point based on a traveling cost, storage information, and the acquired storage period, a traveling cost indicating a cost for moving the item between each two points of the plurality of points, the storage information indicating a storage coefficient being used for calculation of a storage cost of the item at each point of the plurality of points in accordance with the storage period.

11. An information processing apparatus comprising:

a control unit configured to:

acquire a storage period of an item for each point of a plurality of points in a case where the item is moved from a departure point to a destination point, the plurality of points including the departure point, the destination point, and one or more relay points, and

search for a route along which the item is moved from the departure point to the destination point based on a traveling cost, storage information, and the acquired storage period, a traveling cost indicating a cost for moving the item between each two points of the plurality of points, the storage information indicating a storage coefficient being used for calculation of a storage cost of the item at each point of the plurality of points in accordance with the storage period.

FIG. 1

# FIG. 2

# FIG. 3

# FIG. 4

EP 4 131 096 A1

# FIG. 5

EP 4 131 096 A1

500

| | ITEM ID | SHIPPER | ITEM CONTENT | COLLECTION POINT | DELIVERY DESTINATION | COLLECTION DATE AND TIME | ARRIVAL DATE AND TIME |
|---|---|---|---|---|---|---|---|
| 500-1 | 001 | A | FOODS | S1 | X1 | 7/15/2021/12:05 | 7/19/2021/13:00 |
| 500-2 | 002 | B | BOOKS | S2 | X2 | 7/15/2021/12:10 | 7/16/2021/15:00 |
| | ⋮ | ⋮ | ⋮ | ⋮ | ⋮ | ⋮ | ⋮ |

# FIG. 6

600

| | RELAY POINT 1 | RELAY POINT 2 | TRAVELING COST (MOVEMENT DISTANCE) |
|---|---|---|---|
| 600-1 | A | B | 280 |
| 600-2 | A | D | 170 |
| 600-3 | B | C | 230 |
| 600-4 | C | E | 180 |
| 600-5 | D | E | 200 |
| 600-6 | D | F | 150 |
| | ⋮ | ⋮ | ⋮ |

FIG. 7

EP 4 131 096 A1

700

| STORAGE COEFFICIENT FOR A | STORAGE COEFFICIENT FOR B | STORAGE COEFFICIENT FOR C | STORAGE COEFFICIENT FOR D | STORAGE COEFFICIENT FOR E | STORAGE COEFFICIENT FOR F |
|---|---|---|---|---|---|
| 45 | 30.3 | 100 | 30.3 | 100 | 15.6 |

700-1

FIG. 8

EP 4 131 096 A1

800

| STOP COST FOR A | STOP COST FOR B | STOP COST FOR C | STOP COST FOR D | STOP COST FOR E | STOP COST FOR F |
|---|---|---|---|---|---|
| 0 | 50 | 50 | 50 | 0 | 0 |

800-1

## FIG. 9A

900A

| | ARRIVAL POINT | DEPARTURE POINT | MINIMUM TRAVELING COST | MINIMUM STORAGE COST (PER ONE DAY) | STOP COST | DIRECTION |
|---|---|---|---|---|---|---|
| 900-1 | A | A | 0 | 45 | 0 | |
| 900-2 | | D | 170 | 30.3 | 0 | D |
| 900-3 | | A | 340 | 30.3 | 50 | D |
| 900-4 | | E | 370 | 30.3 | 50 | D |
| 900-5 | | F | 320 | 15.6 | 50 | D |
| 900-6 | | D | 470 | 15.6 | 100 | D |
| 900-7 | | A | 640 | 15.6 | 150 | D |
| 900-8 | | E | 670 | 15.6 | 150 | D |
| 900-9 | | C | 850 | 15.6 | 200 | D |
| 900-10 | | B | 1080 | 15.6 | 250 | D |
| 900-11 | | B | 280 | 30.3 | 0 | B |
| 900-12 | | C | 510 | 30.3 | 50 | B |

EP 4 131 096 A1

# FIG. 9B

900B

| | ARRIVAL POINT | DEPARTURE POINT | MINIMUM TRAVELING COST | MINIMUM STORAGE COST (PER ONE DAY) | STOP COST | DIRECTION |
|---|---|---|---|---|---|---|
| 901-1 | D | D | 0 | 30.3 | 0 | |
| 901-2 | | A | 170 | 30.3 | 0 | A |
| 901-3 | | B | 450 | 30.3 | 50 | A |
| 901-4 | | E | 200 | 30.3 | 0 | E |
| 901-5 | | C | 380 | 30.3 | 50 | E |
| 901-6 | | F | 150 | 15.6 | 0 | F |
| 901-7 | | D | 300 | 15.6 | 50 | F |
| 901-8 | | A | 470 | 15.6 | 100 | F |
| 901-9 | | B | 750 | 15.6 | 150 | F |
| 901-10 | | E | 500 | 15.6 | 100 | F |
| 901-11 | | C | 680 | 15.6 | 150 | F |

EP 4 131 096 A1

# FIG. 10

```
                    ( START )
                        │
                        ▼
┌──────────────────────────────────────┐
│ SET TRAVELING COSTS BETWEEN ALL       │
│ RELAY POINTS                          │──── S1001
│ SET STORAGE COEFFICIENTS FOR ALL      │
│ RELAY POINTS                          │
└──────────────────────────────────────┘
                        │
                        ▼
┌──────────────────────────────────────┐
│ SET CERTAIN RELAY POINT AS ARRIVAL    │
│ POINT, AND SET ALL OTHER RELAY        │
│ POINTS AS DEPARTURE POINTS            │──── S1002
│ CALCULATE TRAVELING COST, STOP COST,  │
│ AND STORAGE COST FROM EACH DEPARTURE  │
│ POINT TOWARD ARRIVAL POINT            │
└──────────────────────────────────────┘
                        │
                        ▼
┌──────────────────────────────────────┐
│ IN CALCULATION OF TRAVELING COST AND  │
│ STOP COST, ADD COST EACH TIME STOP IS │
│ MADE AT RELAY POINT ON WAY            │──── S1003
│ SET, AS STORAGE COST, MINIMUM STORAGE │
│ COEFFICIENT IN ROUTE TO ARRIVAL POINT │
└──────────────────────────────────────┘
                        │
                        ▼
```

NO ◄──── ARE THERE PLURALITY OF ROUTES REACHING RELAY POINT n+1 FROM RELAY POINT n? ──── S1004

YES

S1005

IS THERE ROUTE FOR WHICH ALL OF TRAVELING COST, STOP-BY COST, AND STORAGE COST ARE LOW? ──── NO

YES

S1006 — EXTRACT ROUTE FOR WHICH ALL COSTS ARE LOW

S1007 — SET TRAVELING COSTS BETWEEN ALL RELAY POINTS
SET STOP COSTS AND STORAGE COEFFICIENTS FOR ALL RELAY POINTS

S1008 — ARRIVAL POINT? ──── NO

YES

┌──────────────────────────────────────┐
│ SET VARIOUS COSTS OF CORRESPONDING    │
│ ROUTE IN APPROXIMATE COST TABLE       │──── S1009
└──────────────────────────────────────┘

( END )

# FIG. 11

START

S1101 — ACQUIRE ITEM INFORMATION

S1102 — CALCULATE STORAGE PERIOD

S1103

IS THERE ROUTE FROM CURRENT POINT n TO DESTINATION POINT?

NO

YES

S1104 — EXTRACT ALL NEXT POINTS n+1 BY SETTING ARRIVAL POINT IN APPROXIMATE COST TABLE AS CURRENT POINT n AND SETTING DESTINATION POINT AS DEPARTURE POINT

S1105 — CALCULATE PLURALITY OF COST FUNCTIONS f(n) FOR NEXT POINTS n+1 AND ENTER COST FUNCTIONS f(n) INTO QUEUE

S1106 — EXTRACT COST FUNCTION f(n) AT UPPERMOST PORTION OF QUEUE

S1107

IS POINT n DESTINATION POINT?

NO

YES

S1109

ROUTE UNSEARCHABLE

S1108

OUTPUT RESULT OF ROUTE SEARCH

END

# FIG. 12

150

AREA STORAGE COEFFICIENT : 15.6

150km

AREA STORAGE COEFFICIENT : 100

170km

200km

AREA STORAGE
COEFFICIENT : 30.3

180km

AREA STORAGE
COEFFICIENT : 45

280km

230km

AREA STORAGE
COEFFICIENT : 30.3

AREA STORAGE
COEFFICIENT : 100

EP 4 131 096 A1

# FIG. 13

1300

STORAGE PERIOD: 1 DAY

| ARRIVAL POINT | DEPARTURE POINT | MINIMUM TRAVELING COST | STOP COST | STORAGE COST | TOTAL COST | DIRECTION (POINT IMMEDIATELY PRECEDING ARRIVAL POINT) | ROUTE |
|---|---|---|---|---|---|---|---|
| A | A | 0 | 0 | 45 | 45 | | |
| | D | 170 | 0 | 30.3 | 200.3 | D | D-A |
| | A | 340 | 50 | 30.3 | 420.3 | D | A-D-A |
| | E | 370 | 50 | 30.3 | 450.3 | D | A-D-E |
| | F | 320 | 50 | 15.6 | 385.6 | D | A-D-F |
| | D | 470 | 100 | 15.6 | 585.6 | D | A-D-F-D |
| | A | 640 | 150 | 15.6 | 805.6 | D | A-D-F-D-A |
| | E | 670 | 150 | 15.6 | 835.6 | D | A-D-F-D-E |
| | C | 850 | 200 | 15.6 | 1065.6 | D | A-D-F-D-E-C |
| | B | 1080 | 250 | 15.6 | 1345.6 | D | A-D-F-D-E-C-B |
| | B | 280 | 0 | 30.3 | 310.3 | B | A-B |
| | C | 510 | 50 | 30.3 | 590.3 | B | A-B-C |

EP 4 131 096 A1

# FIG. 14

1400

STORAGE PERIOD:100 DAYS

| ARRIVAL POINT | DEPARTURE POINT | MINIMUM TRAVELING COST | STOP COST | STORAGE COST | TOTAL COST | DIRECTION (POINT IMMEDIATELY PRECEDING ARRIVAL POINT) | ROUTE |
|---|---|---|---|---|---|---|---|
| A | A | 0 | 0 | 4500 | 4500 | | |
| | D | 170 | 0 | 3030 | 3200 | D | D-A |
| | A | 340 | 50 | 3030 | 3420 | D | A-D-A |
| | E | 370 | 50 | 3030 | 3450 | D | A-D-E |
| | F | 320 | 50 | 1560 | 1930 | D | A-D-F |
| | D | 470 | 100 | 1560 | 2130 | D | A-D-F-D |
| | A | 640 | 150 | 1560 | 2350 | D | A-D-F-D-A |
| | E | 670 | 150 | 1560 | 2380 | D | A-D-F-D-E |
| | C | 850 | 200 | 1560 | 2610 | D | A-D-F-D-E-C |
| | B | 1080 | 250 | 1560 | 2890 | D | A-D-F-D-E-C-B |
| | B | 280 | 0 | 3030 | 3310 | B | A-B |
| | C | 510 | 50 | 3030 | 3590 | B | A-B-C |

EP 4 131 096 A1

Europäisches
Patentamt

European
Patent Office

Office européen
des brevets

# EUROPEAN SEARCH REPORT

**Application Number**

EP 22 17 4826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/142279 A1 (RUSNAK RYAN [US] ET AL) 13 May 2021 (2021-05-13) * paragraphs [0041], [0070] – paragraphs [0079], [0080], [0087] * | 1-11 | INV. G06Q10/04 G06Q50/30 |
| A | LAM C Y ED – PALAN STEFAN ET AL: "Optimizing logistics routings in a network perspective of supply and demand nodes", CENTRAL EUROPEAN JOURNAL OF OPERATIONS RESEARCH, vol. 29, no. 1, 28 September 2019 (2019-09-28), pages 357-377, XP037352525, ISSN: 1435-246X, DOI: 10.1007/S10100-019-00653-W * abstract * | 1-11 | |
| A | GB 2 499 795 A (IBM [US]) 4 September 2013 (2013-09-04) * abstract * | 1 | TECHNICAL FIELDS SEARCHED (IPC) |
| X,D | JP 2009 286502 A (HITACHI LTD) 10 December 2009 (2009-12-10) * claims 1-9 * | 1 | G06Q |
| A | LISA FLEISCHER ET AL: "Minimum cost flows over time without intermediate storage", PROCEEDINGS OF THE FOURTEENTH ANNUAL ACM-SIAM SYMPOSIUM ON DISCRETE ALGORITHMS : [HELD JANUARY 12 – 14, 2003 IN BALTIMORE, MARYLAND], ACM, 2 PENN PLAZA, SUITE 701 – NEW YORK USA, 12 January 2003 (2003-01-12), pages 66-75, XP058252212, ISBN: 978-0-89871-538-5 * abstract * | 1 | |

The present search report has been drawn up for all claims

| Place of search | Date of completion of the search | Examiner |
|---|---|---|
| Munich | 28 October 2022 | Liendl, Martin |

EPO FORM 1503 03.82 (P04C01)

## ANNEX TO THE EUROPEAN SEARCH REPORT
## ON EUROPEAN PATENT APPLICATION NO.

**EP 22 17 4826**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-10-2022**

| Patent document cited in search report | | Publication date | Patent family member(s) | | Publication date |
|---|---|---|---|---|---|
| US 2021142279 | A1 | 13-05-2021 | CA | 3161443 A1 | 20-05-2021 |
| | | | CA | 3161445 A1 | 20-05-2021 |
| | | | CA | 3161447 A1 | 20-05-2021 |
| | | | CN | 114902257 A | 12-08-2022 |
| | | | DE | 202020005740 U1 | 22-04-2022 |
| | | | DE | 202020005743 U1 | 26-04-2022 |
| | | | DE | 202020005744 U1 | 22-04-2022 |
| | | | EP | 4058964 A1 | 21-09-2022 |
| | | | EP | 4058965 A1 | 21-09-2022 |
| | | | EP | 4058966 A1 | 21-09-2022 |
| | | | US | 10936992 B1 | 02-03-2021 |
| | | | US | 2021142279 A1 | 13-05-2021 |
| | | | US | 2021142280 A1 | 13-05-2021 |
| | | | US | 2021142281 A1 | 13-05-2021 |
| | | | US | 2021142282 A1 | 13-05-2021 |
| | | | US | 2021142283 A1 | 13-05-2021 |
| | | | WO | 2021097104 A1 | 20-05-2021 |
| | | | WO | 2021097111 A1 | 20-05-2021 |
| | | | WO | 2021097112 A1 | 20-05-2021 |
| GB 2499795 | A | 04-09-2013 | GB | 2499795 A | 04-09-2013 |
| | | | US | 2013226446 A1 | 29-08-2013 |
| JP 2009286502 | A | 10-12-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009286502 A
- WO 2002352372 A
- JP 2018077774 A